# EUROPEAN PATENT APPLICATION

(11) **EP 4 803 943 A1**
(43) Date of publication of application: **09.09.2026**
(21) Application number: 24866591.1
(22) Date of filing: 20.12.2024
(51) Int. Cl.: G02B 6/42

(54) **OPTICAL MODULE**

(30) Priority: 29.11.2024 CN 202411750552; 29.11.2024 CN 202411750597; 29.11.2024 CN 202411752325; 29.11.2024 CN 202411750563
(71) Applicant: Hisense Broadband Multimedia Technologies Co., Ltd., Economic and Technical Development Zone Qingdao Shandong 266555 (CN)
(72) Inventor: HAN, Jihong, Qingdao, Shandong 266555 (CN); FENG, Zhongrui, Qingdao, Shandong 266555 (CN); BIAN, Huizheng, Qingdao, Shandong 266555 (CN); SHAO, Qian, Qingdao, Shandong 266555 (CN); LIU, Weiwei, Qingdao, Shandong 266555 (CN)
(74) Representative: Hoefer & Partner Patentanwälte mbB
(86) International application number: PCT/CN2024/140998
(87) International publication number: WO 2026/113081

(57) **Abstract**

An optical module provided by the present disclosure includes a circuit board and a base. A surface of the circuit board has a first notch portion and a second notch portion. A surface of the base is provided with a first optical emission component and a second optical emission component. If the first optical emission component and the second optical emission component are arranged on the same surface of the base, an area of the base is larger, which is more conducive to heat dissipation of the devices. Since the first notch portion and the second notch portion is connected therebetween with the circuit board, a surface of the circuit board between the first notch portion and the second notch portion may be fully utilized for wiring to increase wiring area. A first modulation driver chip is connected to the surface of the circuit board between the first notch portion and the second notch portion by wire bonding. A surface of the circuit board is provided with a first optical reception component and a second optical reception component. The first optical reception component includes a first light turning member and a first optical reception chip, which are respectively fixed to a surface of a first substrate with a small thermal expansion coefficient. The first substrate is less deformed by heat, which may improve stability of optical path.

## Description

This disclosure claims priorities to application No. 202411750552.4 filed on November 29, 2024 with the China National Intellectual Property Administration (CNIPA), application No. 202411750563.2 filed with the CNIPA on November 29, 2024, application No. 202411750597.1 filed with the CNIPA on November 29, 2024, and application No. 202411752325.5 filed with the CNIPA on November 29, 2024, the entire disclosures of which are incorporated herein by reference.

### FIELD OF THE INVENTION

This disclosure relates to the technical field of optical fiber communication, and in particular to an optical module.

### BACKGROUND OF THE INVENTION

With the developments of new services and application models such as cloud computing, mobile Internet, and video, improvement of optical communication technology has become increasingly important. In optical communication technology, the optical module, as one of the key components in optical communication device, can realize the conversion of optical and electrical signals. In the process of the development of optical communication technology, it is required that the data transmission rate of the optical module be continuously improved.

### SUMMARY OF THE INVENTION

In some embodiments, an optical module is provided, including:
a circuit board having a first notch portion and a second notch portion;
a base, a surface of which is provided thereon with a first optical emission component and a second optical emission component, wherein
the first optical emission component includes:
   a first laser disposed on a surface of the base and located in the first notch portion, the first laser being configured to output a light that does not carry a signal;
   a first optical modulation chip located in the first notch portion and configured to modulate the light that does not carry a signal to generate an optical signal;
   a first optical fiber array located in the first notch portion and coupled to an end face of the first optical modulation chip to transmit the optical signal;
   a first modulation driver chip electrically connected to the first optical modulation chip and coupled to a surface of the circuit board between the first notch portion and the second notch portion through wire bonding;
the second optical emission component includes:
   a second laser disposed on the surface of the base and located in the second notch portion, the second laser being configured to output a light that does not carry a signal;
   a second optical modulation chip located in the second notch portion and configured to modulate the light that does not carry a signal to generate an optical signal;
   a second optical fiber array located in the second notch portion and coupled to an end face of the second optical modulation chip to transmit the optical signal;
   a second modulation driver chip electrically connected to the second optical modulation chip and connected to the surface of the circuit board between the first notch portion and the second notch portion through wire bonding;
a first optical reception component that is disposed on one side of the circuit board and includes:
   a light turning member disposed on one side of the circuit board, an end face of the light turning member being formed with a first reflective end face;
   a first optical reception chip disposed on one side surface of the circuit board and located in a reflective optical path of the first reflective end face;
a second optical reception component that is disposed on one side of the circuit board and includes:
   a second light turning member disposed on one side of the circuit board, an end face of the second light turning member being formed with a second reflective end face; a second optical reception chip disposed on one side surface of the circuit board and located in a reflective optical path of the second reflective end face;
or, the first optical reception component includes:
   a first lens assembly covered on the surface of the circuit board, a surface of the first lens assembly being formed with a first reflective surface;
   a first optical reception chip located on the surface of the circuit board and in a reflective optical path of the first reflective surface;
the second optical reception component is arranged on a surface of the circuit board and includes:
   a second lens assembly covered on the surface of the circuit board, a surface of the second lens assembly being formed with a second reflective surfacee;
   a second optical reception chip located on the surface of the circuit board and in a reflective optical path of the second reflective surface.

### BRIEF DESCRIPTION OF THE DRAWINGS

In order to illustrate technical solutions disclosed in this disclosure more clearly, a brief description on the accompanying drawings used in some embodiments of this disclosure will be given below. It is obvious that the accompanying drawings described below are only those of some embodiments of this disclosure, and for those skilled in the art, other accompanying drawings may also be obtained based on these drawings. In addition, the accompanying drawings described below may be regarded as schematic diagrams and are not intend to limit actual size of the relevant products, actual process of the relevant methods, actual timing of signals or the like involved in the disclosed embodiments.
FIG. 1 is a partial structural diagram of an optical communication system provided according to some embodiments of this disclosure;
FIG. 2 is a partial structural diagram of a host computer provided according to some embodiments of this disclosure;
FIG. 3 is a structural diagram of an optical module provided according to some embodiments of this disclosure;
FIG. 4 is an exploded diagram of an optical module provided according to some embodiments of this disclosure;
FIG. 5 is a diagram showing an internal structure of a coherent optical assembly according to some embodiments;
FIG. 6a is a diagram showing an internal structure of an optical module according to some embodiments;
FIG. 6b is a first exploded diagram of interior of an optical module according to some embodiments;
FIG. 7a is a diagram showing an internal structure of another optical module according to some embodiments;
FIG. 7b is an exploded diagram of another optical module according to some embodiments;
FIG. 8a is a second exploded diagram of interior of an optical module according to some embodiments;
FIG. 8b is a first structural diagram of a light turning member according to some embodiments;
FIG. 8c is an exploded view of a light turning member according to some embodiments;
FIG. 8d is a structural diagram of an optical reception component according to some embodiments;
FIG. 8e is a second structural diagram of a light turning member according to some embodiments;
FIG. 9a is a diagram of an assembly of an optical emission component and a circuit board according to some embodiments;
FIG. 9b is an exploded view of an optical emission component according to some embodiments;
FIG. 9c is a sectional view of an assembly of an optical emission component and a circuit board according to some embodiments;
FIG. 9d is a partial structural diagram of an optical emission component according to some embodiments;
FIG. 10a is a first sectional structural diagram of an optical reception component according to some embodiments;
FIG. 10b is a second sectional structural diagram of an optical reception component according to some embodiments;
FIG. 10c is a first sectional structural diagram of an optical reception component according to some embodiments;
FIG. 10d is a second sectional structural diagram of an optical reception component according to some embodiments;
FIG. 11a is an exploded structural diagram of another optical reception component according to some embodiments;

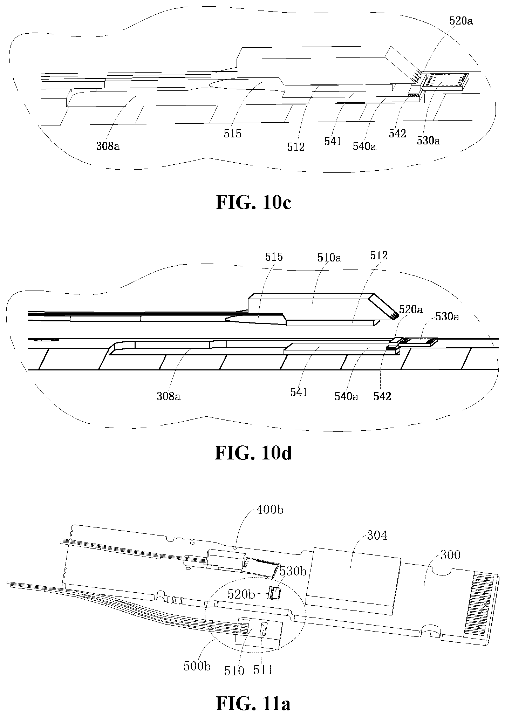

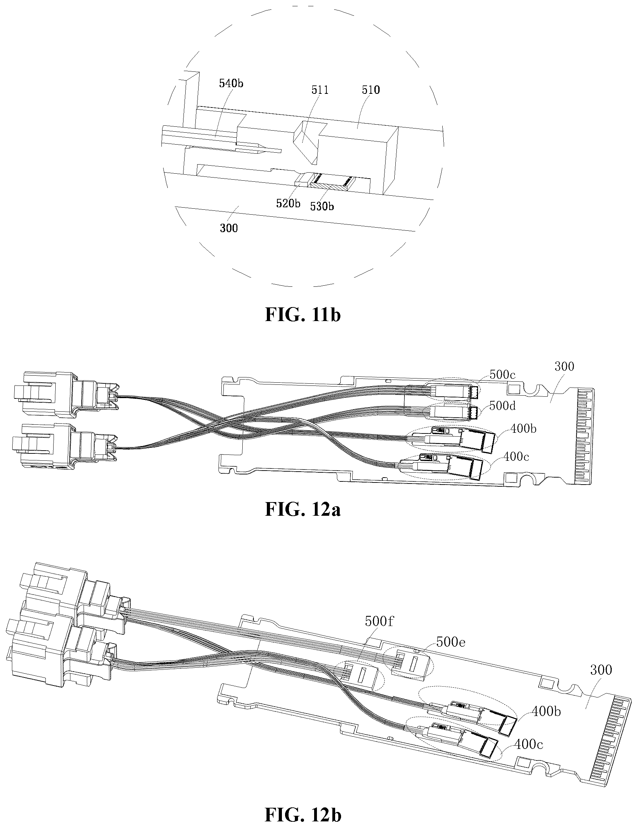

FIG. 11 b is a sectional structural diagram of another optical reception component according to some embodiments;
FIG. 12a is a first internal structure diagram of another optical module according to some embodiments;
FIG. 12b is a second internal structure diagram of another optical module according to some embodiments;

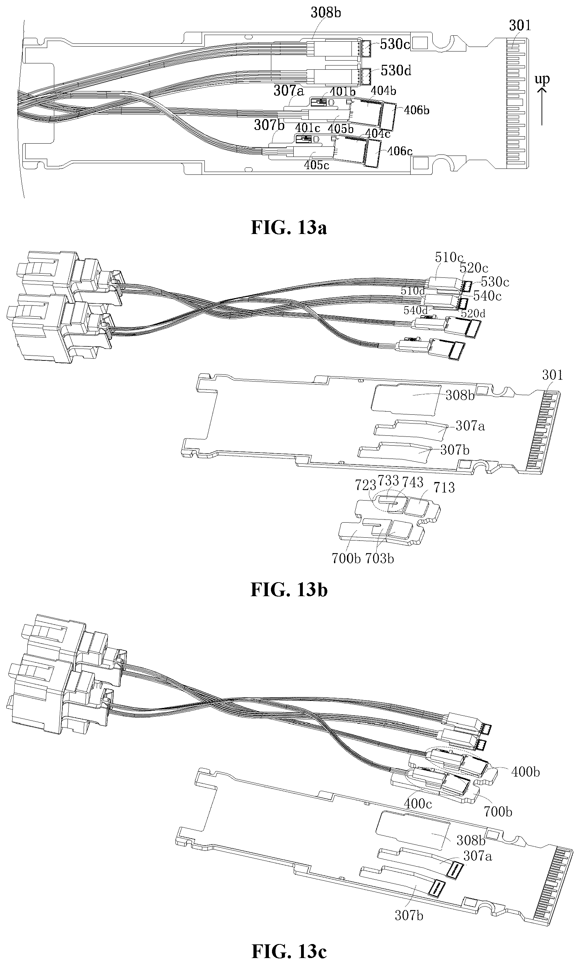

FIG. 13a is a second internal structure diagram of another optical module according to some embodiments;
FIG. 13b is a first exploded view of an assembly of another optical module according to some embodiments;
FIG. 13c is a second exploded view of an assembly of another optical module assembly according to some embodiments;

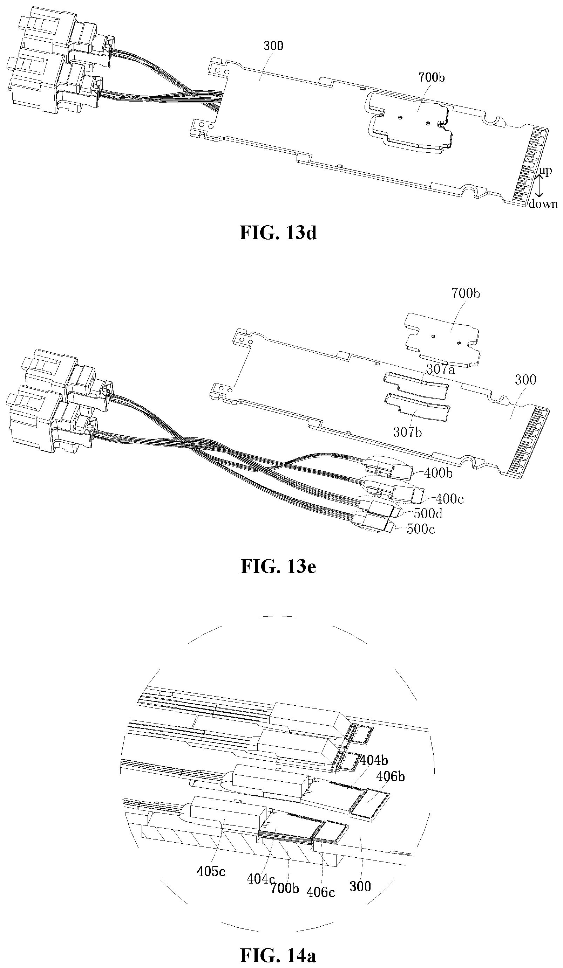

FIG. 13d is a diagram of an assembly of a base and a circuit board according to some embodiments;
FIG. 13e is a third exploded view of an assembly of another optical module according to some embodiments;
FIG. 14a is a first sectional view of another optical module according to some embodiments;

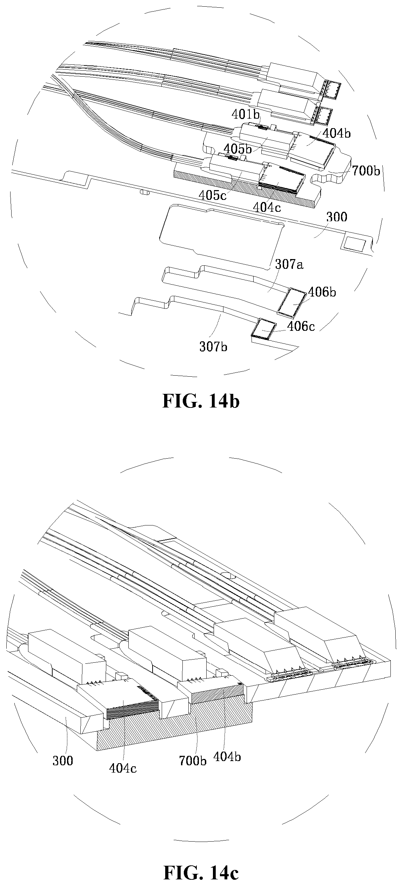

FIG. 14b is a first exploded sectional view of another optical module according to some embodiments;
FIG. 14c is a first sectional view of another optical module according to some embodiments;

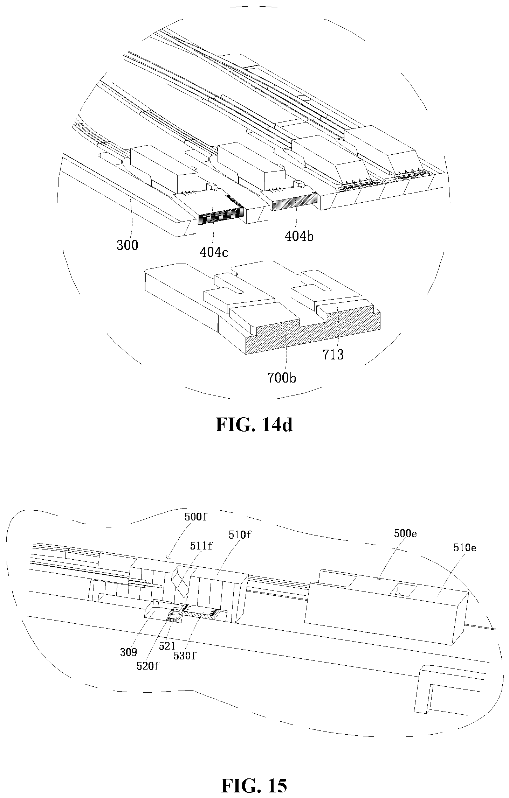

FIG. 14d is a first exploded sectional view of another optical module according to some embodiments;
FIG. 15 is a structural diagram showing an arrangement of another optical module according to some embodiments;

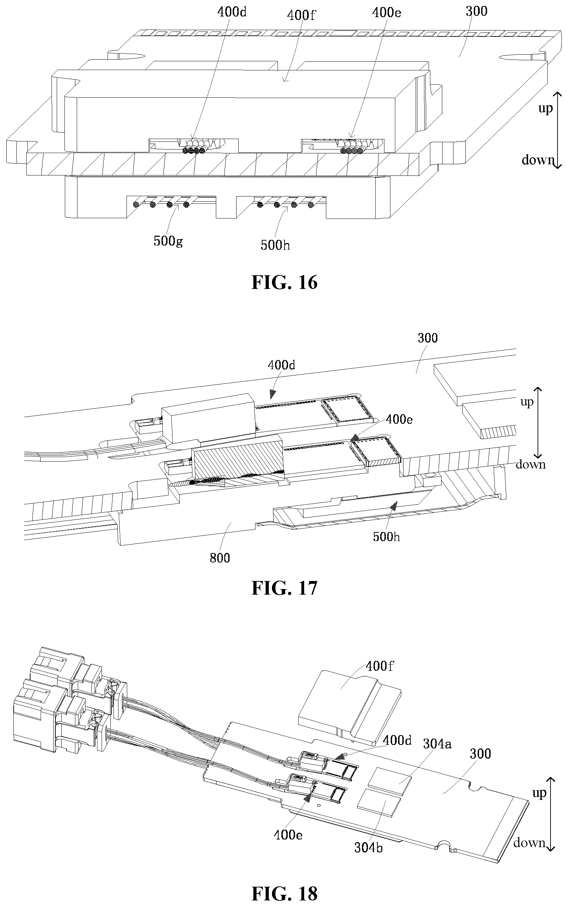

FIG. 16 is a side structural diagram of another optical module according to some embodiments;
FIG. 17 is a sectional structural diagram of another optical module according to some embodiments;
FIG. 18 is a first diagram of a structure on an upper surface of a circuit board according to some embodiments;

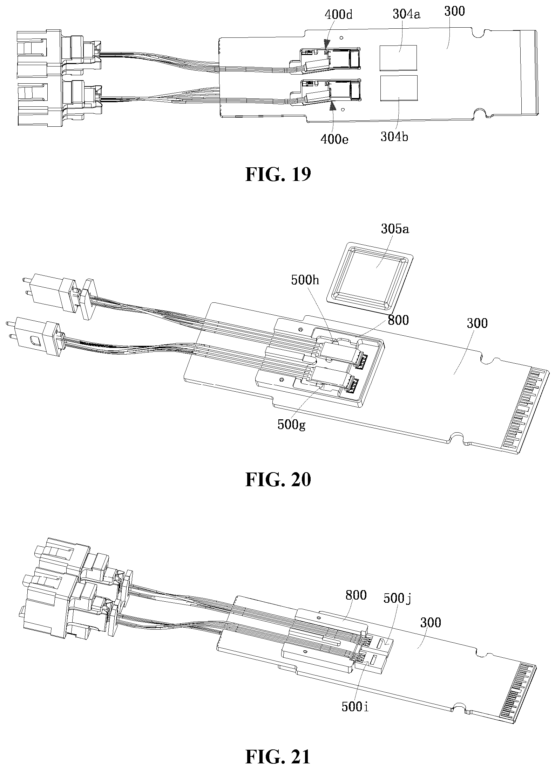

FIG. 19 is a second diagram of a structure on an upper surface of a circuit board according to some embodiments;
FIG. 20 is a first diagram of a structure on a lower surface of a circuit board according to some embodiments;
FIG. 21 is a second diagram of structure on a lower and upper surfaces of a circuit board according to some embodiments;

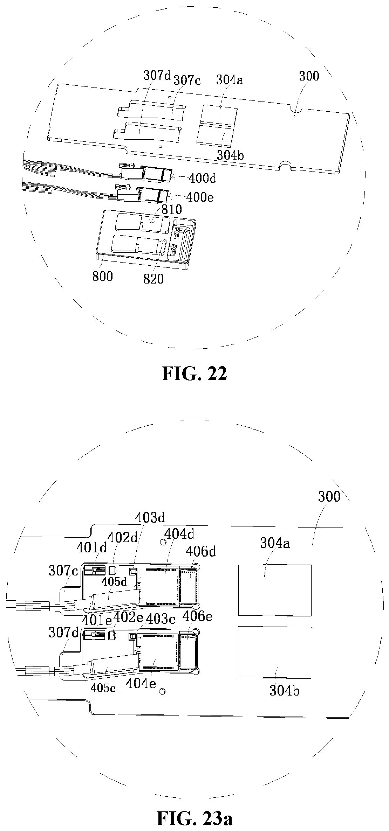

FIG. 22 is an exploded view of another optical module according to some embodiments;
FIG. 23a is a diagram of an assembly structure on an upper surface of a circuit board according to some embodiments;

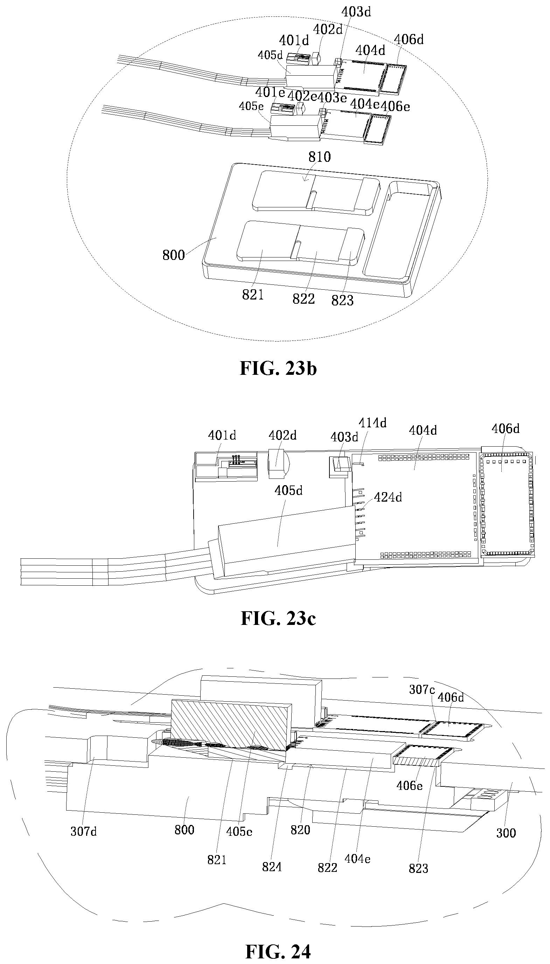

FIG. 23b is an exploded view of an assembly of a base and an optical emission component according to some embodiments;
FIG. 23c is a structural diagram of a first optical emission component according to some embodiments;
FIG. 24 is a diagram of an assembly structure on a top and bottom surfaces of a base according to some embodiments;

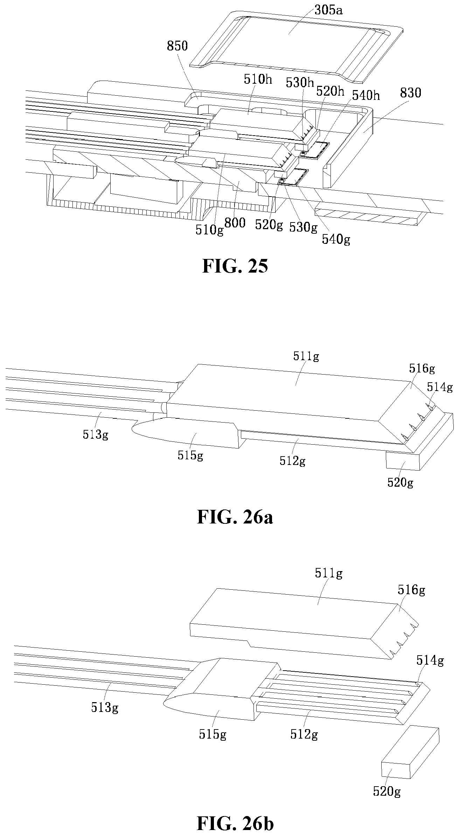

FIG. 25 is a diagram of an assembly structure on a bottom surface of a base according to some embodiments;
FIG. 26a is a diagram showing an assembly structure of a first light turning member and a first converging lens according to some embodiments;
FIG. 26b is an exploded view of an assembly of a first light turning member and a first converging lens according to some embodiments;

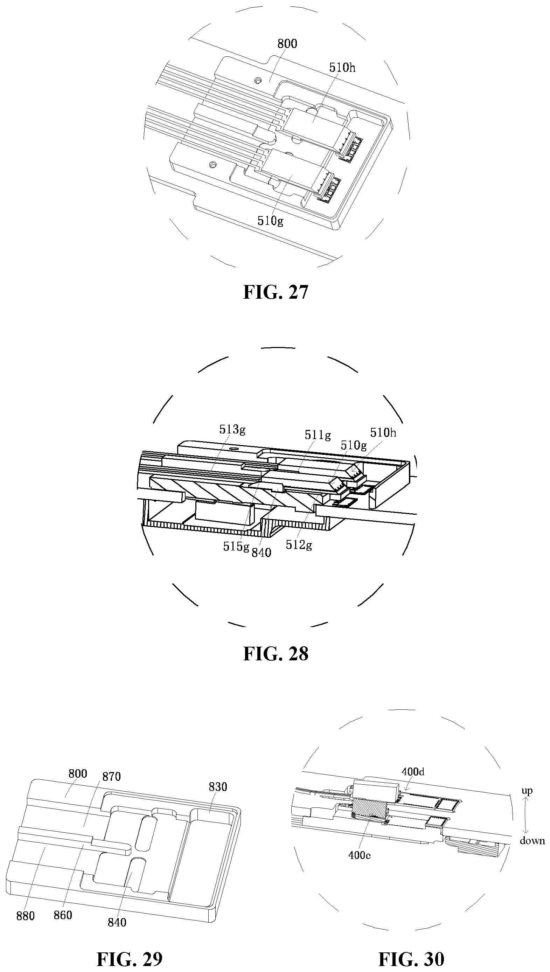

FIG. 27 is a diagram of an assembly structure of a bottom surface of a base according to some embodiments;
FIG. 28 is a sectional view of an assembly on a bottom surface of a base according to some embodiments;
FIG. 29 is a structural diagram of a bottom surface of a base according to some embodiments;
FIG. 30 is a first sectional structural diagram of another optical module according to some embodiments;

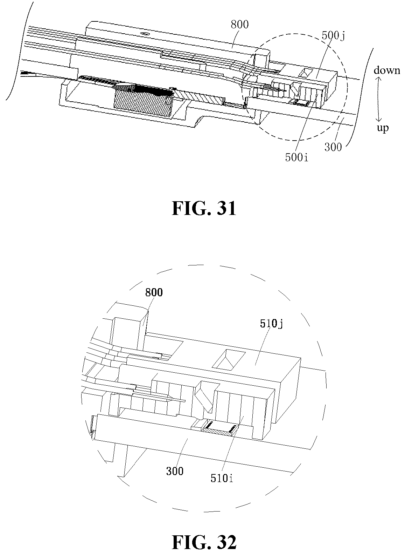

FIG. 31 is a second sectional structural diagram of another optical module according to some embodiments; and
FIG. 32 is a partial sectional view of another optical module according to some embodiments.

### DETAILED DESCRIPTION OF THE EMBODIMENTS

Some embodiments of the present disclosure will be described in detail below in conjunction with the accompanying drawings. However, the described embodiments are only part of the embodiments of the present disclosure, rather than all of the embodiments. Based on the embodiments provided in the present disclosure, all other embodiments obtained by those skilled in the art fall within the protection scope of the present disclosure.

Unless the context requires otherwise, throughout the specification and the claims, the term "comprise" is to be interpreted to be open and inclusive, that is, "includes, but not limited to"; the terms "first" and "second" are not to be understood as indicating or implying relative importance or indicating an upper limit on quantity; the term "plurality" means two or more; the term "connect" is to be understood in a broad sense, for example, "connect" may mean a fixed connection, a detachable connection, or an integral connection, it may be directly connected or indirectly connected through an intermediate medium; the use of the terms "adapted to" or "configured to" implies open and inclusive language, which does not exclude devices that are suitable for or configured to perform additional tasks or steps; terms such as "parallel", "perpendicular", "same", "consistent", and "flush" are not limited to absolute mathematical theoretical relationships, but also include an acceptable error range generated in practice, and also include differences based on the same design concept but due to manufacturing reasons.

In the optical communication technology, it is generally necessary to load information onto light and use the propagation of light to achieve information transmission, so as establish information transmission between information processing devices. In this regard, the light loaded with information is an optical signal. The optical signal is propagated in the information transmission devices, which may reduce loss of optical power and thus can achieve high-speed, long-distance, and low-cost information transmission. The signal that may be identified and processed by the information processing device is an electrical signal. The information processing device generally includes an optical network unit (ONU), a gateway, a router, a switch, a mobile phone, a computer, a server, a tablet, a television and the like, and the information transmission device typically includes an optical fiber, a waveguide and the like.

Mutual conversion of optical and electrical signals between the information processing device and the information transmission device may be achieved through optical modules. For example, an optical fiber may be connected to at least one of an optical signal input terminal and an optical signal output terminal of an optical module, and an optical network unit may be connected to at least one of an electrical signal input terminal and an electrical signal output terminal of the optical module; a first optical signal from the optical fiber is transmitted to the optical module, which converts the first optical signal into a first electrical signal, and then transmits the first electrical signal to the optical network unit; a second electrical signal from the optical network unit is transmitted into the optical module, which converts the second electrical signal into a second optical signal, and then transmits the second optical signal to the optical fiber. Since information transmission between multiple information processing devices may be made via an electrical signal, at least one of the information processing devices needs to be directly connected to the optical module, and it is unnecessary for all of the information processing devices to be directly connected to the optical module. The information processing device directly connected to the optical module is called as a host computer of the optical module. In addition, the optical signal input end or the optical signal output end of the optical module may be called as an optical port, and the electrical signal input end or the electrical signal output end of the optical module may be called as an electrical port.

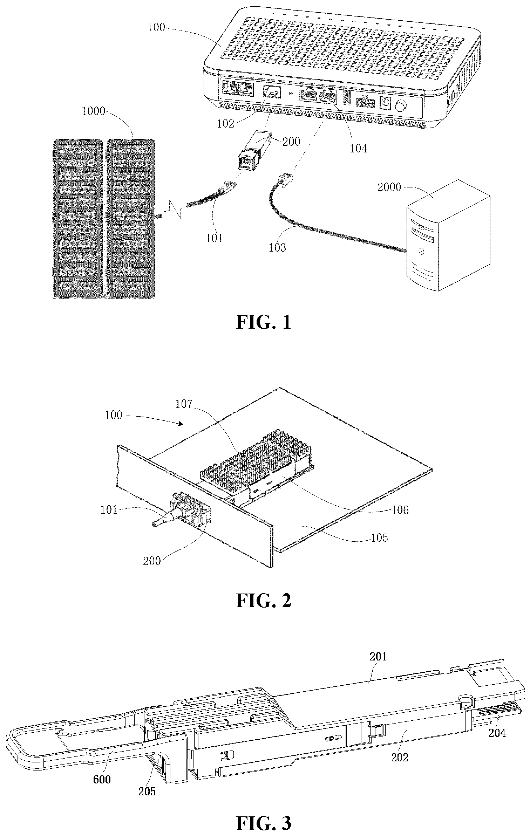

FIG. 1 is a partial structural diagram of an optical communication system provided according to some embodiments. As shown in FIG. 1, the optical communication system mainly includes a remote information processing device 1000, a local information processing device 2000, a host computer 100, an optical module 200, an optical fiber 101, and a network cable 103.

One end of the optical fiber 101 extends towards the remote information processing device 1000, while the other end thereof is coupled to the optical module 200 through the optical port of the optical module 200. An optical signal may undergo a total reflection in the optical fiber 101, and propagation of the optical signal in a total reflection direction can almost maintain the original optical power. The optical signal undergoes multiple total reflections in the optical fiber 101, such that the optical signal from the remote information processing device 1000 is transmitted into the optical module 200, or the optical signal from the optical module 200 is transmitted to the remote information processing device 1000, thereby achieving long-distance information transmission with low power loss.

The optical communication system may include one or more optical fiber 101. The optical fiber 101 may be detachably connected or fixedly connected to the optical module 200. The host computer 100 is configured to provide data signals to the optical module 200, receive data signals from the optical module 200, or monitor or control the working state of the optical module 200.

The host computer 100 includes a substantially rectangular housing and an optical module interface 102 disposed on the housing. The optical module interface 102 is configured to be coupled to the optical module 200 such that a unidirectional or bidirectional electrical signal connection is established between the host computer 100 and the optical module 200.

The host computer 100 includes an external electrical interface which may be coupled to the electrical signal network. For example, the external electrical interface includes a Universal Serial Bus (USB) interface or a network cable interface 104, and the network cable interface 104 is configured to be coupled by the network cable 103, thereby establishing a unidirectional/bidirectional electrical signal connection between the host computer 100 and the network cable 103. One end of the network cable 103 is connected to the local information processing device 2000, and the other end thereof is connected to the host computer 100, so as to establish an electrical signal connection between the local information processing device 2000 and the host computer 100 through the network cable 103. For example, a third electrical signal emitted by the local information processing device 2000 is transmitted to the host computer 100 through the network cable 103; the host computer 100 generates a second electrical signal based on the third electrical signal; the second electrical signal from the host computer 100 is transmitted to the optical module 200; the optical module 200 converts the second electrical signal into a second optical signal, and transmits the second optical signal to the optical fiber 101, and the second optical signal is transmitted to the remote information processing device 1000 through the optical fiber 101. For example, a first optical signal from the remote information processing device 1000 is propagated through the optical fiber 101; the first optical signal from the optical fiber 101 is transmitted into the optical module 200; the optical module 200 converts the first optical signal into a first electrical signal, and transmits the first electrical signal to the host computer 100; the host computer generates a fourth electrical signal based on the first electrical signal, and transmits the fourth electrical signal to the local information processing device 2000. It is noted that the optical module is a tool for achieving the mutual conversion between optical and electrical signals, and during the conversion between optical and electrical signals as described above, the information is not changed, but methods for encoding and decoding the information may be changed.

The host computer 100 includes not only an optical network unit but also an optical line terminal (OLT), an optical network terminal (ONT), or a data center server or the like.

FIG. 2 is a partial structural diagram of a host computer according to some embodiments. In order to illustrate a connection relationship between the optical module 200 and the host computer 100 clearly, FIG. 2 only shows the structure of the host computer 100 related to the optical module 200. As shown in FIG. 2, the host computer 100 further includes a PCB circuit board 105 disposed within the housing, a cage 106 disposed on a surface of the PCB circuit board 105, a radiator 107 disposed on the cage 106, and an electrical connector disposed inside the cage 106. The electrical connector is configured to be coupled to the electrical port of the optical module 200. The radiator 107 has a raised structure, such as a fin, that increases a heat dissipation area.

The optical module 200 is inserted into the cage 106 of the host computer 100 and then is secured by the cage 106. Thus, heat generated by the optical module 200 is conducted to the cage 106, and then dissipated via the radiator 107. After the optical module 200 is inserted into the cage 106, the electrical port of the optical module 200 is connected to the electrical connector inside the cage 106 such that a bidirectional electrical signal connection is established between the optical module 200 and the host computer 100. In addition, the optical port of the optical module 200 is connected to the optical fiber 101, such that the optical module 200 establishes a bidirectional optical signal connection with the optical fiber 101.

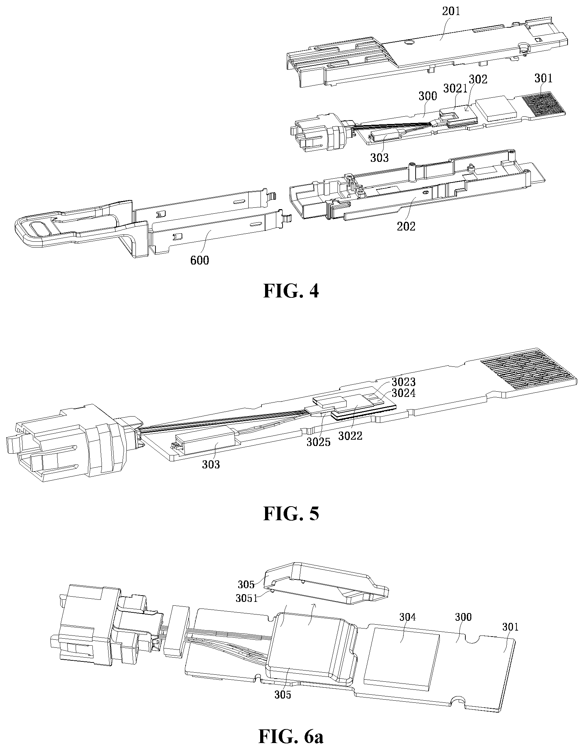

FIG. 3 is a structural diagram of an optical module according to some embodiments, and FIG. 4 is an exploded diagram of an optical module according to some embodiments. As shown in FIG. 3 and FIG. 4, in some embodiments, the optical module 200 includes a shell, and the shell includes an upper shell part 201 and a lower shell part 202. The upper shell part 201 is covered on the lower shell part 202, form two openings 204 and 205, one of which is an electrical port, and the other is an optical port. In some embodiments, the shell forms one opening, which is both an electrical port and an optical port.

In some embodiments, the upper shell part 201 and the lower shell part 202 are made of metal material(s), which facilitates to achieving electromagnetic shielding and heat dissipation.

The assembling way in which the upper shell part 201 is combined with the lower shell part 202 facilitates mounting the circuit board 300 or the like into the above-mentioned shell, such that these components are encapsulated and protected by the upper shell part 201 and the lower shell part 202.

A direction along a connecting line of the two openings 204 and 205 may be consistent with a length direction of the optical module 200 or inconsistent with the length direction of the optical module 200. For example, the opening 204 is located at an end of the optical module 200 (right end in FIG. 3), and the opening 205 is also located at an end of the optical module 200 (left end in FIG. 3). Alternatively, the opening 204 is located at an end of the optical module 200, while the opening 205 is located at a side of the optical module 200.

In some embodiments, the lower shell part 202 includes a bottom plate 2021 and two lower side plates 2022 located at opposite sides of the bottom plate 2021 and disposed perpendicular to the bottom plate 2021, and the upper shell part 201 includes a cover plate 2011 which is covered on the two lower side plates 2022 of the low shell part 202 so as to form the above-mentioned shell.

In some embodiments, the lower shell part 202 includes a bottom plate 2021 and two lower side plates 2022 located on opposite sides of the bottom plate 2021 and disposed perpendicular to the bottom plate 2021; the upper shell part 201 includes a cover plate 2011 and two upper side plates located on opposite sides of the cover plate 2011 and disposed perpendicular to the cover plate 2011, and the two upper side plates are combined with the two lower side plates 2022 such that the upper shell part 201 is covered on the lower shell part 202.

As shown in FIG. 3 and FIG. 4, in some embodiments, the optical module includes a circuit board 300 disposed in the shell, and the circuit board 300 includes circuit wiring, electronic elements, chips, and so on. The electronic elements and chips are connected together via the circuit wiring according to a circuit design so as to achieve various functions such as power supply, electrical signal transmission, and grounding. For example, the electronic element may include a capacitor, a resistor, a transistor, and a Metal-Oxide-Semiconductor Field-Effect Transistor (MOSFET). For example, the chip may include a microcontroller unit (MCU), a laser driver chip, a transimpedance amplifier (TIA), a limiting amplifier (LA), a Clock and Data Recovery (CDR) chip, a power management chip, and a digital signal processing (DSP) chip.

In some embodiments, the circuit board includes a rigid circuit board. Due to its relatively hard material, the rigid circuit board may also achieve a load-bearing function. For example, the rigid circuit board may steadily carry the above-mentioned electronic elements and chips thereon. Furthermore, the rigid circuit board may be inserted into the electrical connector inside the cage 106 of the host computer 100.

In some embodiments, the circuit board also includes a flexible circuit board, which may be used independently or in combination with a rigid circuit board.

In some embodiments, the circuit board further includes a golden finger formed on a surface of an end thereof, which is composed of multiple independent pins.

In some implementations, the golden finger 301 is disposed on a surface of one side of the circuit board 300 (e.g., an upper surface shown in FIG. 4). In some implementations, the golden finger 301 is disposed on surfaces of upper and lower sides of the circuit board 300 to provide a larger number of pins, so as to adapt to occasions where a large number of pins are required.

In some implementations, the golden finger of the circuit board extends from the opening 204 and is inserted into the electrical connector of the host computer 100; the circuit board is inserted into the cage 106, and is coupled to the electrical connector in the cage 106 through the golden finger 301. The golden finger 301 is configured to establish an electrical connection with the host computer to achieve power supply, grounding, Inter-Integrated Circuit (I2C) signal transmission, data signal transmission or the like.

In some embodiments, the optical module 200 further includes an unlocking component 600 located outside its shell. The unlocking component 600 is configured to achieve a fixed connection between the optical module 200 and the host computer, or to release the optical module 200 from the host computer.

For example, the unlocking component 600 is located outside of the two lower side plates 2022 of the lower shell part 202, and includes a snap fit component that matches the cage 106 of the host computer 100. When the optical module 200 is inserted into the cage 106, the snap fit component of the unlocking component 600 can fix the optical module 200 in the cage 106; when the unlocking component 600 is pulled, the snap fit component of the unlocking component 600 moves accordingly, thereby changing the connection relationship between the snap fit component and the host computer, so as to release the fixation of the optical module 200 and the host computer, so that the optical module 200 can be pulled out of the cage 106.

In some embodiments, the optical module includes a coherent optical assembly 302. The coherent optical assembly 302 is configured to perform modulation and demodulation of optical signals so as to achieve emission and reception of optical signals.

In some embodiments, the optical module includes a tunable laser 303.

In some embodiments, the tunable laser 303 acts as an external light source, and a light beam emitted by the tunable laser is split into a first light beam and a second light beam. The first light beam is transmitted into the coherent optical assembly 302 as a light to be modulated. The coherent optical assembly 302 modulates the light to be modulated through a built-in optical chip to generate an optical signal. The second light beam is transmitted into the coherent optical assembly 302 as a local oscillator light. The coherent optical assembly 302 performs coherent demodulation on the received optical signal according to the second light beam, to generate an electrical signal.

In some embodiments, the coherent optical assembly 302 includes a cover plate 3021 located at a top portion.

FIG. 5 is a diagram of an internal structure of a coherent optical assembly according to some embodiments. As shown in FIG. 5, in some embodiments, the coherent optical assembly 302 may include an optical modulation-demodulation chip 3022. The optical modulation-demodulation chip 3022 performs modulation and demodulation of optical signals internally, thereby realizing emission and reception of optical signals.

In some embodiments, the optical modulation-demodulation chip 3022 may be a silicon photonic chip. Emission and reception of optical signals are both achieved inside the silicon photonic chip. It is easy to etch the silicon material, and thus functional devices may be integrated in a silicon photonic chip.

In some embodiments, if the optical modulation-demodulation chip 3022 is a silicon photonic chip, it may be impossible to achieve a light source in the silicon photonic chip, as the silicon material is an indirect bandgap material which cannot achieve spontaneous photon radiation. Therefore, the tunable laser 303 may act as a light source for the optical modulation-demodulation chip 3022.

In some embodiments, the optical modulation-demodulation chip 3022 may be a thin-film lithium niobate chip. The emission and reception of optical signals are both realized inside the thin-film lithium niobate chip. The thin-film lithium niobate has a linear electro-optic effect, and an external electric field may cause a linear change of the refractive index of the thin-film lithium niobate in a corresponding direction, such that a light wave transmitted in the medium has adjustable intensity, phase and the like. Therefore, thin-film lithium niobate may be selected as a material of the optical modulator to achieve a higher modulation rate, etc.

In some embodiments, the optical modulation-demodulation chip 3022 may be a III-V/Si hybrid integrated photonic chip. The emission and reception of optical signals are both realized inside the III-V/Si hybrid integrated photonic chip. In the III-V/Si hybrid integrated photonic chip, the growth material system of the optical modulator is a III-V semiconductor material which is a direct bandgap semiconductor material with a strong quantum-confined Stark effect. By controlling change of an external electric field, charge carrier changes and refractive index changes are caused to achieve modulation of optical signal.

In some embodiments, the optical modulation-demodulation chip 3022 may be a thin-film lithium niobate/Si hybrid integrated photonic chip, and the emission and reception of optical signals are both realized inside the thin-film lithium niobate/Si hybrid integrated photonic chip. Compared with the III-V/Si hybrid integrated photonic chip, the optical modulator in the thin-film lithium niobate/Si hybrid integrated photonic chip is a thin-film lithium niobate-based optical modulator.

In some embodiments, the coherent optical assembly 302 may include a driver chip 3023 located at one side of the optical modulation-demodulation chip 3022. The driver chip 3023 provides a driving signal for the modulation of the optical modulation-demodulation chip 3022.

In some embodiments, the coherent optical assembly 302 may include a TIA 3024. The TIA 3024 is located at one side of the optical modulation-demodulation chip 3022. An electrical signal generated after demodulation by the optical modulation-demodulation chip 3022 is amplified and processed by the TIA 3024 before being transmitted to the later stage.

In some embodiments, the coherent optical assembly 302 may include an optical fiber array 3025.

In some embodiments, a light beam emitted by the tunable laser 900, which acts as an external light source, is split into a first light beam and a second light beam. The first light beam and the second light beam are respectively coupled and transmitted through the optical fiber array 3025 to the optical modulation-demodulation chip 3022.

In some embodiments, the optical signal modulated by the optical modulation-demodulation chip 3022 is transmitted to the outside via the optical fiber array 3025.

In some embodiments, the optical modulation-demodulation chip 3022 is internally integrated with a Mach-Zehnder (MZ) modulator to modulate the optical signal. The MZ modulator has a high modulation bandwidth, so it can handle high-speed data transmission. The MZ modulator has low insertion loss and can maintain integrity of a signal. The MZ modulator has low power consumption and fast response speed.

In some embodiments, modulation and demodulation of optical signals in the coherent optical assembly 302 may cause crosstalk between signals. In some embodiments, the demodulation of optical signal is separated from the coherent optical assembly 302 to reduce crosstalk between signals. At this time, the optical modulation-demodulation chip 3022 is converted into an optical modulation chip to realize the modulation function of the optical signal. The demodulation of optical signals may be achieved via other package structures, such as micro-optical package structure, COB (chip on board) packaging, etc.

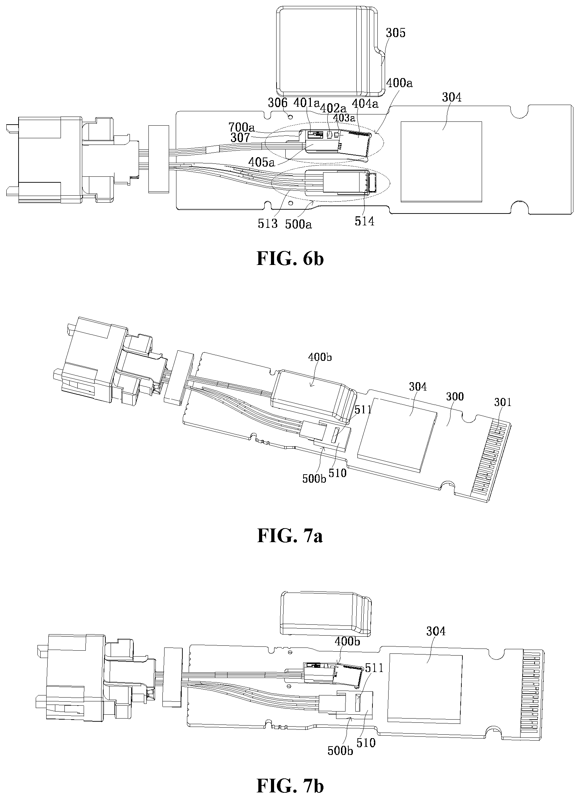

FIG. 6a is a diagram of an internal structure of an optical module according to some embodiments, and FIG. 6b is a first internal exploded view of an optical module according to some embodiments. As shown in FIGS. 6a-6b, in some embodiments, a signal processing chip 304 is disposed on a surface of the circuit board 300. The signal processing chip 304 processes electrical signals input to/output from the optical module and is electrically connected to the golden finger 301. The signal processing chip 304 may be a DSP chip.

In some embodiments, the optical module includes an optical emission component 400a. The optical emission component 400a is configured to emit an optical signal. The optical emission component 400a may be located at one side of the signal processing chip 304.

In some embodiments, the optical module includes an optical reception component 500a. The optical reception component 500a is configured to receive an optical signal. The optical reception component 500a may be located side by side with the optical emission component 400a on one side of the signal processing chip 304.

In some embodiments, the optical emission component 400a includes an optical modulation chip to modulate and generate an optical signal, so as to achieve emission of an optical signal. The optical reception component 500a adopts a micro-optical packaging solution to achieve reception of the optical signal.

In some embodiments, the optical emission component 400a may include a laser 401a. In some embodiments, the optical emission component 400a may include an optical modulation chip 404a. In some embodiments, the optical emission component 400a may include an optical fiber array 405a. Light emitted by the laser 401a is transmitted into the optical modulation chip 404a, where it is modulated into an optical signal, and then the optical signal is output from the optical modulation chip 404a and transmitted through the optical fiber array 405a. The optical modulation chip 404a may be a silicon-based chip or a thin-film lithium niobate-based chip.

In some embodiments, the optical reception component 500a includes an optical fiber 513, and the optical fiber 513 extends toward the optical reception chip until one end thereof is exposed above the optical reception chip. The end of the optical fiber 513 is formed with a reflective end face 514, and then the reflective end face 514 is exposed above the optical reception chip. The reflective end face 514 is configured to reflect and change the transmission direction of the optical signal transmitted by the optical fiber 513, so as to reflect the optical signal transmitted by the optical fiber 513 to the optical reception chip, thereby realizing the turning of the optical path.

FIG. 7a is a diagram showing an internal structure of another optical module according to some embodiments, and FIG. 7b is an exploded diagram of another optical module according to some embodiments. As shown in FIGS. 7a and 7b, in some embodiments, a signal processing chip 304 is disposed on a surface of the circuit board 300. The signal processing chip 304 processes the electrical signals that are input to/to be output from the optical module and is electrically connected to the golden finger 301. The signal processing chip 304 may be a DSP chip.

In some embodiments, the optical module includes an optical emission component 400a. The optical emission component 400a is configured to emit an optical signal. The optical emission component 400a may be located at one side of the signal processing chip 304.

In some embodiments, the optical module includes an optical reception component 500b. The optical reception component 500b is configured to achieve reception of an optical signal. The optical reception component 500b may be located side by side with the optical emission component 400a at one side of the signal processing chip 304.

In some embodiments, the optical emission component 400a includes an optical modulation chip to modulate and generate an optical signal, to achieve emission of an optical signal. The optical reception component 500b adopts a COB packaging solution to achieve emission of the optical signal.

In some embodiments, the optical emission component 400a in FIG. 7a may have the same structure as the optical emission component 400a in FIG. 6b. That is, the same optical emission component 400a may be combined with the optical reception component 500a or the optical reception component 500b.

In some embodiments, the optical reception component 500b includes a lens assembly 510, and the lens assembly 510 is covered on a surface of the circuit board 300. The optical reception chip is located on the surface of the circuit board 300, and the lens assembly 510 is covered above the optical reception chip. A surface of the lens assembly 510 is formed with a reflective surface 511, and the reflective surface 511 is located above the optical reception chip. The reflective surface 511 may turn an optical path toward the surface of the optical reception chip, such that the optical signal is coupled into the optical reception chip.

As shown in FIG. 6b, in some embodiments, the optical module includes a cover plate 305. The cover plate 305 covers above the optical emission component 400a and the optical reception component 500a, thereby protecting the optical emission component 400a and the optical reception component 500a.

In some embodiments, the circuit board 300 is formed, on two sides of a surface thereof, with limiting holes 306. The cover plate 305 is formed, on two sides of a bottom surface thereof, with limiting portions 3051. The limiting portions 3051 are embedded into the limiting holes 306, thereby fixing the cover plate 305 to the circuit board 300 and facilitating plugging and unplugging of the cover plate 305.

In some embodiments, if there are wirings in an inner layer of the circuit board 300 at the position where the limiting holes 306 are located, the limiting holes 306 are configured as blind holes; If there is no wiring in the inner layer of the circuit board 300 at the position where the limiting holes 306 are located, the limiting holes 306 are through holes.

In some embodiments, the optical module may include a base 700a for supporting and carrying the optical emission component 400a.

In some embodiments, a surface of the circuit board 300 is formed with a notch portion 307 so as to arrange the base 700a.

In some embodiments, the optical emission component 400a may include a laser 401a. The laser 401a is located on the base 700a. The laser 401a may emit light along a side without modulating an optical signal. That is, the light emitted by the laser 401a does not carry an optical signal. Exemplarily, the laser 401a is a DFB laser.

In some embodiments, the optical emission component 400a may include a lens 402a. The lens 402a is located on the base 700a.

In some embodiments, the lens 402a is located in an output optical path of the laser 401a. The lens 402a is a converging lens for converging the light emitted by laser 401a.

In some embodiments, the optical emission component 400a may include an isolator 403a. The isolator 403a is located on a surface of the base 700a. The isolator 403a is located in the output optical path of the lens 402a to prevent the light emitted by the laser 401a from returning to the laser 401a.

In some embodiments, the optical emission component 400a may include an optical modulation chip 404a. The optical modulation chip 404a is located on the base 700a. The optical modulation chip 404a is located in the output optical path of the isolator 403a and receives the light output from the isolator 403a. The optical modulation chip 404a performs signal phase modulation on the light output from the isolator 403a to obtain an optical signal.

In some embodiments, the optical modulation chip 404a integrates an MZ modulator to modulate the optical signal so as to achieve emission of the optical signal. For example, the optical modulation chip 404a may be a silicon photonic chip, a thin-film lithium niobate chip, or a III-V chip.

In some embodiments, an optical path corresponding to reception of light is separated from the optical modulation-demodulation chip through the optical reception component 500a, so the laser 401a may not provide local oscillator optical signal for the optical reception component 500a, and may only provide a light source to be modulated for the optical emission component 400a. Therefore the laser 401a is arranged in the input optical path of the optical modulation chip 404a. The laser 401a is different from the tunable laser 900 in that: the tunable laser 900 needs to provide both a light source to be modulated for the optical emission end and a local oscillator optical signal for the optical reception end.

In some embodiments, the optical emission component 400a may include an optical fiber array 405a. The optical fiber array 405a is located on a surface of the base 700a. The optical fiber array 405a is end-face coupled to the optical modulation chip 404a. The optical fiber array 405a is located in the output optical path of the optical modulation chip 404a to transmit the optical signal modulated by the optical modulation chip 404a to the outside.

In some embodiments, the light emitted by the laser 401a is transmitted into the optical modulation chip 404a, where it is modulated into an optical signal, which is then output from the optical modulation chip 404a and transmitted via the optical fiber array 405a.

In some embodiments, the laser 401a, the lens 402a, and the isolator 403a are located in the input optical path of the optical modulation chip 404a, and provide the light source to be modulated to the optical modulation chip 404a. The optical fiber array 405a is coupled to an output optical port of the optical modulation chip 404a. The input optical port and the output optical port of the optical modulation chip 404a are formed at the same side, and thus the laser 401a, the lens 402a, the isolator 403a and the optical fiber array 405a are located at the same side of the optical modulation chip 404a.

In some embodiments, the optical modulation chip 404a is electrically connected to the signal processing chip 304, and the modulation driving signal required by the optical modulation chip 404a may be provided by the signal processing chip 304. Alternatively, the modulation driving signal required by the optical modulation chip 404a may be provided by an independently provided driver chip.

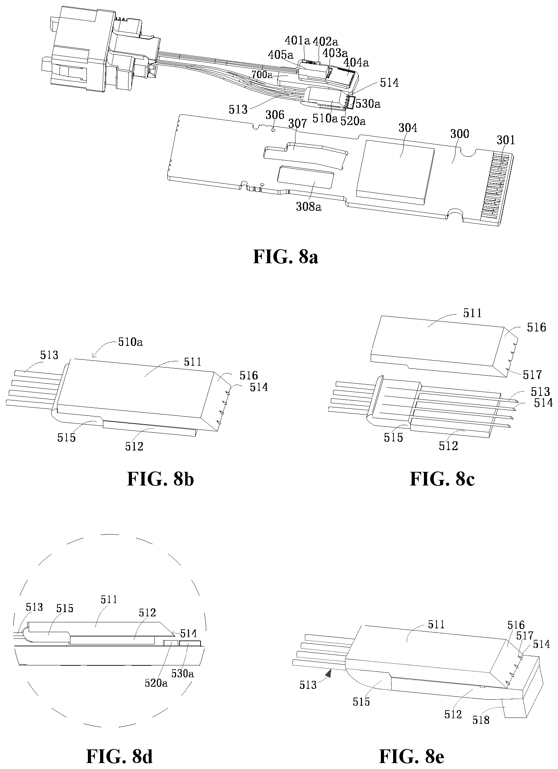

FIG. 8a is a second exploded view of an internal structure of an optical module according to some embodiments. As shown in FIG. 8a, in some embodiments, a surface of the circuit board 300 is formed with a notch portion 307 such that the base 700a is embedded therein. The notch portion 307 is provided as a through hole.

In some embodiments, the optical reception component 500a may include a light turning member 510a.

In some embodiments, the optical reception component 500a may include an optical reception chip 520a.

In some embodiments, the optical reception component 500a may include a TIA 530a.

In some embodiments, the light turning member 510a includes an optical fiber 513. The optical fiber 513 extends toward the optical reception chip 520a, and one end of the optical fiber 513 is exposed above the optical reception chip 520a. One end of the optical fiber 513 is formed with a reflective end face 514, and the reflective end face 514 is exposed above the optical reception chip 520a. The reflective end face 514 is configured to reflect and change a transmission direction of the optical signal transmitted by the optical fiber 513, so as to reflect the optical signal transmitted by the optical fiber 513 to the optical reception chip 520a, thereby realizing the turning of the optical path.

In some embodiments, the TIA 530a is located on a surface of circuit board 300 and at one side of the optical reception chip 520a. The optical reception chip 520a converts a received optical signal into a photocurrent signal, the TIA 530a converts the photocurrent signal into a photovoltage signal, amplifies the photovoltage signal, and then transmits it to the signal processing chip 304.

FIG. 8b is a first structural diagram of a light turning member according to some embodiments, and FIG. 8c is an exploded diagram of a light turning member according to some embodiments. As shown in FIGS. 8b and 8c, in some embodiments, the light turning member 510a may include a first optical fiber support portion 511 and a second optical fiber support portion 512. The first optical fiber support portion 511 and the second optical fiber support portion 512 are arranged opposite to each other up and down, and a plurality of optical fibers 513 are sandwiched between the two. The plurality of optical fibers 513 form an optical fiber array. A bottom surface of the first optical fiber support portion 511 is formed with V-shaped grooves 517, and the optical fibers 513 are embedded in the V-shaped grooves.

In some embodiments, the light turning member 510a may include an optical fiber fixing portion 515. The optical fiber fixing portion 515 is located at a tail portion of the second optical fiber support portion 512 to fix the optical fibers 513. The optical fiber fixing portion 515 protects and buffers the optical fibers 513, thereby preventing the optical fibers from being broken. Exemplarily, the optical fiber fixing portion 515 is made of a soft gel, which protects and buffers the optical fibers 513.

In some embodiments, a length of the first optical fiber support portion 511 is longer than that of the second optical fiber support portion 512, and there is a space from the second optical fiber support portion 512 to one end of the first optical fiber support portion 511, leaving a coating space for the optical fiber fixing portion 515.

In some embodiments, one end of the optical fiber 513 is formed with a reflective end face 514, and the reflective end face 514 is located above the optical reception chip 520a. The reflective end face 514 is configured to reflect and change the transmission direction of the optical signal transmitted by the optical fiber 513 to reflect the optical signal transmitted by the optical fiber 513 to the optical reception chip 520a.

In some embodiments, the reflective end face 514 is an inclined surface, and the optical signal transmitted by the optical fiber 513 is totally reflected at the reflective end face 514. Exemplarily, an inclination angle of the reflective end face 514 is 46°-50°, such as 48°.

In some embodiments, the optical fiber 513 passes through the first optical fiber support portion 511 from one end thereof to the outside of the other end of the first optical fiber support portion 511, such that the reflective end face 514 is located outside the other end of the first optical fiber support portion 511. One end of the optical fiber fixing portion 515 is connected to one end of the second optical fiber support portion 512, and the other end of the optical fiber fixing portion 515 fixedly connects one end of the optical fiber 513 to support the end of the optical fiber 513.

In some embodiments, an end face of the first optical fiber support portion 511 is formed with a protective surface 516, and the protective surface 516 surrounds the reflective end face 514 to protect the reflective end face 514. For example, the protective surface 516 is an inclined surface, and an inclination angle of the protective surface 516 is 46-50°, for example, the inclination angle of the protective surface 516 is 48°.

In some embodiments, the reflective end face 514 and the protective surface 516 are formed by grinding and polishing. The end face of the optical fiber 513 is ground to a certain inclination angle to form the reflective end face 514. The optical fiber 513 is cylindrical, and the cross section of the reflective end face 514 after grinding is elliptical, so a bottom of the optical fiber 513 is exposed relative to the first optical fiber support portion 511.

FIG. 8d is a structural diagram of an optical reception component according to some embodiments. As shown in FIG. 8d, in some embodiments, a gap is left between the optical fiber fixing portion 515 and the surface of the circuit board 300 to prevent the optical fiber fixing portion 515 from being adhered to the surface of the circuit board 300 through the optical adhesive used to fix the second optical fiber support portion 512, and to maintain the binding force of the optical fiber fixing portion 515 on the optical fiber 513.

In some embodiments, the optical reception chip 520 is located on a surface of the circuit board 300. When the optical reception chip 520 is fixed, it has a fixed thickness, and thus a distance from its photosensitive surface to the surface of the circuit board 300 is fixed.

In some embodiments, a preset distance between the reflective end face 514 and the optical reception chip 520a is small to ensure that the optical signal reflected by the reflective end face 514 can be transmitted to the photosensitive surface of the optical reception chip 520a, and then received by the optical reception chip 520a. The second optical fiber support portion 512 has a small thickness to ensure that the distance from the reflective end face 514 to the optical reception chip 520a meets the preset distance. Exemplarily, the thickness of the second optical fiber support portion 512 is less than that of the first optical fiber support portion 511 to ensure that the distance from the reflective end face 514 to the optical reception chip 520a meets the preset distance.

In some embodiments, the second optical fiber support portion 512 does not extend to below the reflective end face 514, leaving a space for arranging the optical reception chip 520a. In this way, under the premise of ensuring that the distance from the reflective end face 514 to the optical reception chip 520a meets the preset distance, the thickness of the second optical fiber support portion 512 may be appropriately increased to increase the support force of the second optical fiber support portion 512 on the optical fiber 513 and ensure the stability of the optical path. Exemplarily, the thickness of the second optical fiber support portion 512 is greater than the distance from the reflective end face 514 to the optical reception chip 520a, and a bottom surface of the second optical fiber support portion 512 is located below a top surface of the optical reception chip 520a.

In some embodiments, the optical reception chip 520 is located on the surface of the circuit board 300, The surface of the circuit board 300 where the second optical fiber support portion 512 is located is formed with a groove, such that the second optical fiber support portion 512 may extend downward, thereby increasing the thickness of the second optical fiber support portion 512.

In some embodiments, the second optical fiber support portion 512 extends to below the reflective end face 514, so that the second optical fiber support portion 512 can protect the end of the optical fiber 513. In this case, the surface of the circuit board where the optical reception chip 520a is located is formed with a groove, to sink the optical reception chip 520a, thereby ensuring that the distance from the reflective end face 514 to the optical reception chip 520a meets the preset distance. Exemplarily, the bottom surface of the second optical fiber support portion 512 is above the top surface of the optical reception chip 520a.

In some embodiments, if the thickness of the second optical fiber support portion 512 is small and its material can ensure sufficient supporting force, the length of the second optical fiber support portion 512 can be extended to below the reflective end face 514.

FIG. 8e is a second structural diagram of a light turning member according to some embodiments. As shown in FIG. 8e, in some embodiments, the second optical fiber support portion 512 is extended to below the reflective end face 514, so that the second optical fiber support portion 512 can protect the end of the optical fiber 513. In this case, the optical reception chip 520a is located on the surface of the circuit board 300.

As shown in FIG. 8b, the bottom of the reflective end face 514 of the optical fiber 513 is exposed relative to the first optical fiber support portion 511, and the second optical fiber support portion 512 does not extend to below the reflective end face 514, so the bottom of the reflective end face 514 cannot be protected. If the second optical fiber support portion 512 is extended to below the reflective end face 514, the second optical fiber support portion 512 can protect the end of the optical fiber 513.

In some embodiments, if the length of the second optical fiber support portion 512 extends to below the reflective end face 514, the bottom surface of the second optical fiber support portion 512 is above the top surface of the optical reception chip 520a, and the distance between the reflective end face 514 and the optical reception chip 520a increases. In order to ensure that the optical signal reflected from the reflective end face 514 can fall on the photosensitive surface of the optical reception chip 520a, the length of the second optical fiber support portion 512 is extended until it extends to below the second optical fiber support portion 512 to carry a converging lens 518. The converging lens 518 is located between the reflective end face 514 and the optical reception chip 520a, and the converging lens 518 can converge the optical signal reflected from the reflective end face 514, so that the optical signal reflected from the reflective end face 514 can fall on the photosensitive surface of the optical reception chip 520a.

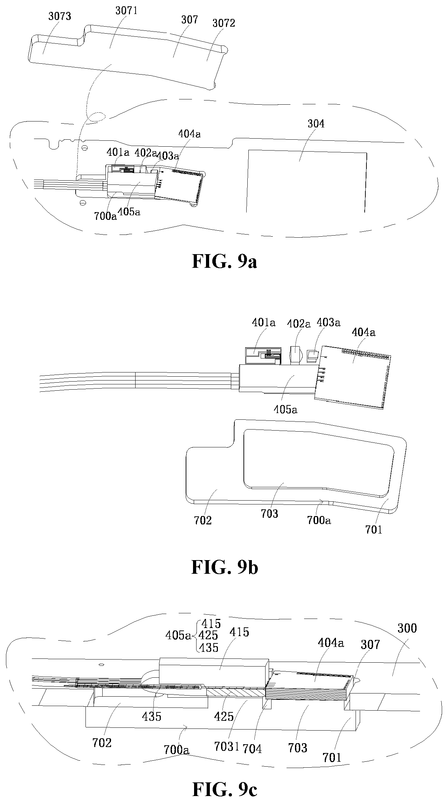

FIG. 9a is a diagram showing an assembly of an optical emission component and a circuit board according to some embodiments, FIG. 9b is an exploded diagram of an optical emission component according to some embodiments, and FIG. 9c is a sectional diagram of an assembly of an optical emission component and a circuit board according to some embodiments. As shown in FIGS. 9a-9c, in some embodiments, a laser 401a, a lens 402a, an isolator 403a, an optical modulation chip 404a and an optical fiber array 405a are supported on the surface of the base 700a.

In some embodiments, heat generated by the laser 401a, the optical modulation chip 404a, etc. are relatively large. The base 700a provides a large heat dissipation surface and has good heat dissipation performance. Therefore the heat generated by the laser 401a and the optical modulation chip 404a can be dissipated through the base 700a. Exemplarily, the base 700a may be a metal base. In addition, the base 700a has a small thermal deformation, which helps to ensure the stability of the optical path.

In some embodiments, a surface of the circuit board 300 is formed with a notch portion 307 such that the base 700a may be embedded therein. The notch portion 307 can accommodate the laser 401a, the lens 402a, the isolator 403a, the optical modulation chip 404a and the optical fiber array 405a.

In some embodiments, one end of the base 700a has a carrying portion 701 so as to carry the circuit board 300.

In some embodiments, the optical modulation chip 404 a is electrically connected to the signal processing chip 304, and the signal processing chip 304 can provide a driving signal for the optical modulation chip 404a for the modulation of the optical signal.

In some embodiments, the signal processing chip 304 may be flipped on the surface of the circuit board 300. Exemplarily, solder bumps on a bottom surface of the signal processing chip 304 are connected downward to the surface of the circuit board 300. In some embodiments, after the solder bumps of the signal processing chip 304 are connected to pads on the surface of the circuit board 300 by heating and pressurizing, viscous filler may be filled in two directions along the edge of the signal processing chip 304, and the filled viscous filler is sucked and flows toward the center as the gap between the signal processing chip 304 and the circuit board 300 has a capillary siphon effect, thereby filling the gap between the signal processing chip 304 and the circuit board 300, realizing stable bonding between the signal processing chip 304 and the circuit board 300.

In some embodiments, one end of the signal processing chip 304 is electrically connected, from a solder bump, to the golden finger 301 through wiring on the surface of the circuit board 300.

In some embodiments, the optical modulation chip 404a is wire bonded to the surface of the circuit board 300 through surface pads, and then electrically connected to the solder bumps of the signal processing chip 304 through the wirings on the surface of the circuit board 300 to achieve electrical connection between the optical modulation chip 404a and the signal processing chip 304.

In some embodiments, a surface of the base 700a has a convex surface 703. A surface of the convex surface 703 is protruded relative to the surface of the carrying portion 701. Some types of optical modulation chips 404a have a thickness less than the thickness of the circuit board 300. The convex surface 703 can compensate for the thickness difference between the optical modulation chip 404a and the circuit board 300, such that the surface of the optical modulation chip 404a is closer to the surface of the circuit board 300, shorten the wire bonding length between the optical modulation chip 404a and the circuit board 300, and optimize the transmission performance of the high-frequency signal.

In some embodiments, the convex surface 703 may include surfaces of different heights to match the optical axis heights between the laser 401a and the optical modulation chip 404a, and between the optical modulation chip 404a and the optical fiber array 405a. In some embodiments, in order to be compatible with various optical devices of different models, the convex surface 703 may also be a surface with consistent height to improve the applicability of the base 700a.

In some embodiments, the optical modulation chip 404a is fixed to the convex surface 703 by optical adhesive, and the optical fiber array 405a is also fixed to the convex surface 703 by optical adhesive. A recessed portion 704 is formed on the the convex surface between the optical modulation chip 404a and the optical fiber array 405a to collect overflowed optical adhesive and reduce the adhesive connection phenomenon.

In some embodiments, the convex surface 703 includes a carrying surface 7031. The optical fiber array 405a is located on the carrying surface 7031.

In some embodiments, the optical fiber array 405a may include a first support portion 415 and a second support portion 425. The first support portion 415 and the second support portion 425 clamp the optical fiber therebetween so as to support and fix the optical fiber. In some embodiments, the second support portion 425 is fixedly connected to the carrying surface 7031 by applying optical adhesive.

In some embodiments, the optical fiber array 405a may include a fixing portion 435. One end of the fixing portion 435 is connected to one end of the second support portion 425. The fixing portion 435 protects and buffers the optical fiber, thereby preventing the fiber from being broken. Exemplarily, the fixing portion 435 may be a soft gel, which helps to protect and buffer the optical fiber 513.

In some embodiments, a length of the first support portion 415 is longer than that of the second support portion 425, and there is a space between the second support portion 425 and one end of the first support portion 415, leaving a coating space for the fixing portion 435.

In some embodiments, two ends of the second support portion 425 are exposed to a certain length relative to the carrying surface 7031, and thus the two ends of the second support portion 425 are not coated with optical adhesive, thereby preventing the two ends of the second support portion 425 from being broken under stress. In some embodiments, the first support portion 415 and the second support portion 425 may be made of glass, which is fragile.

In some embodiments, the carrying surface 7031 does not provide support for the fixing portion 435, and the fixing portion 435 is suspended relative to the carrying surface 7031, which prevents the fixing portion 435 from being optically adhered to the carrying surface 7031, thereby ensuring that the fixing portion 435 continuously wraps the optical fiber.

In some embodiments, the optical fiber should run horizontally along the surface of the circuit board 300, so as to protect the optical fiber from being broken when being subject to a stress upon coming in contact with the circuit board 300. In some embodiments, the fiber outlet of the fixing portion 435 may be lifted upward by a certain amount, such that the optical fiber may run horizontally and buffered when it falls on the surface of the circuit board 300, reducing interference with the surface of the circuit board 300 and ensuring that the optical fiber is led out smoothly and horizontally.

In some embodiments, an optical fiber segment that is contained by the fixing portion 435 is fixed inside the fixing portion, while an optical fiber segment exposed outside the fixing portion 435 is movable. Then, a tail portion of the fixing portion 435 may be used as a fulcrum to lift the optical fiber segment out of the fixing portion 435 upward to a certain extent such that the optical fiber may run horizontally and buffered when it falls on the surface of the circuit board 300.

In some embodiments, there is a distance between one end of the fixing portion 435 and the circuit board 300, and the optical fiber segment out of the fixing portion 435 is suspended relative to the surface of the base 700a. In the case that the optical fiber segment out of the fixing portion 435 is lifted upward, this distance can provide bending space for the optical fiber, and the optical fiber is not subjected to stress in the bending space, which may protect the optical fiber.

In some embodiments, the base 700a may include an extension portion 702. A surface of the extension portion 702 is lower than the carrying surface 7031. The fixing portion 435 and the optical fiber are located above the extension portion 702. There is a gap between the fixing portion 435 and the surface of the extension portion 702 in the longitudinal direction, which provides a bending space for the optical fiber segment out of the fixing portion 435 to avoid fiber breakage. The optical fiber segment out of the fixing portion 435 runs above the extension portion 702, and the optical fiber segment out of the fixing portion 435 is lifted upward by a certain amplitude with the tail portion of the fixing portion 435 as a fulcrum. In this way, when the optical fiber falls on the surface of the circuit board 300, it can run horizontally and buffered, thereby ensuring that the fiber is led out smoothly and horizontally.

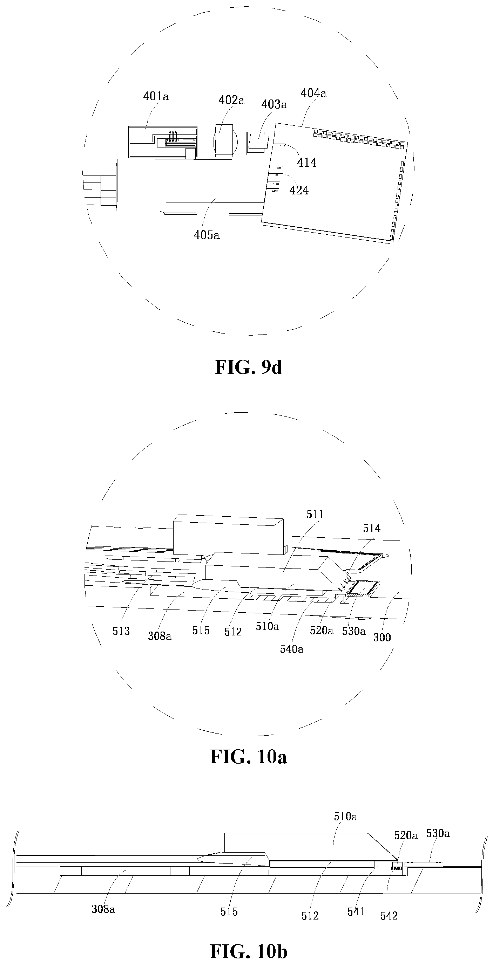

FIG. 9d is a partial structural diagram of an optical emission component according to some embodiments. As shown in FIG. 9d, in some embodiments, the optical modulation chip 404a is end-face coupled to the optical fiber array 405a. The optical modulation chip 404a has a built-in MZ modulator, which loads a signal onto the light wave emitted by the laser 401a and modulates it to generate an optical signal. The optical fiber array 405a transmits the optical signal modulated by the optical modulation chip 404a.

In some embodiments, an end face of the optical modulation chip 404a includes an input optical port 414 and an output optical port 424. The input optical port 414 faces the isolator 403a. The output optical port 424 faces the optical fiber array 405a. Taking the 400G transmission rate and the single-wavelength 100G transmission rate as an example, the end face of the optical modulation chip 404a is formed with four output optical ports 424 to output four optical carrier signals.

In some embodiments, an angle between an input optical waveguide corresponding to the input optical port 414 and the end face of the optical modulation chip 404a may be an acute angle, so the input optical waveguide is not arranged perpendicular to the end face, which may reduce end face reflection. An output optical waveguide corresponding to the output optical port 424 is similarly arranged to reduce end face reflection.

In some embodiments, a light entering end face of the optical fiber array 405a is designed as a bevel, and a light entering end face of an internal optical fiber is also designed as a bevel, to prevent an optical signal incident into the optical fiber array 405a from returning to the optical modulation chip 404a, thereby improving the return loss and allowing more light to be transmitted in the optical fiber. Exemplarily, the light entering end face of the optical fiber array 405a is polished into a bevel with an angle of 8°.

In some embodiments, in conjunction with FIG. 9a, the optical modulation chip 404a is tilted, that is, the light entering and exiting end faces of the optical modulation chip 404a are non-perpendicularly arranged relative to a long side direction of the circuit board 300. The optical modulation chip 404a is obliquely arranged such that the input and output optical waveguides are arranged parallel to the long side direction of the circuit board 300, and then the laser 401a and the optical fiber array 405a may be arranged parallel to the surface of the circuit board 300, which may reduce a recessed area of the notch portion 307 on the surface of the circuit board 300, and the signal transmission performance of the circuit board 300 may be guaranteed as much as possible.

In some embodiments, the shape of the notch portion 307 is adapted to the structural features of the optical emission component 400a. The notch portion 307 may be designed as a through hole, and the base 700a carries the circuit board 300 from the bottom surface of the circuit board 300 upward, and the carrying surface of the base 700a faces the same as the upper surface of the circuit board 300, such that the laser 401a, the lens 402a, the isolator 403a, the optical modulation chip 404a and the optical fiber array 405a are supported toward the same direction as the upper surface of the circuit board 300, and the individual device is electrically connected to the upper surface of the circuit board 300.

In some embodiments, the notch portion 307 may include a first through hole portion 3071. The laser 401a, the lens 402a, the isolator 403a and the optical fiber array 405a are embedded in the first through hole portion 3071. Since the laser 401a, the lens 402a, the isolator 403a and the optical fiber array 405a are arranged parallel to the surface of the circuit board 300, the first through hole portion 3071 is also arranged parallel to the surface of the circuit board 300.

In some embodiments, the notch portion 307 may include a second through hole portion 3072. The optical modulation chip 404a is embedded in the second through hole portion 3072. The second through hole portion 3072 is connected to one end of the first through hole portion 3071. In the orientation shown in FIG. 9a, the second through hole portion 3072 is tilted downward relative to the first through hole portion 3071 to adapt to the arrangement of the optical modulation chip 404a.

In some embodiments, the notch portion 307 may include a third through hole portion 3073. The third through hole portion 3073 is connected to the other end of the first through hole portion 3071. Along a width direction of the circuit board 300, the third through hole portion 3073 is smaller in width relative to the first through hole portion 3071 to reduce the hole-digging area. The led out optical fiber segment of the optical fiber array 405a passes through the third through hole portion 3073. As mentioned above, the third through hole portion 3073 is configured to provide a bending space for the optical fiber segment out of the fixing portion 435, thereby avoiding fiber breakage. The optical fiber segment out of the fixing portion 435 runs through the third through hole portion 3073, and the tail portion of the fixing portion 435 is used as a fulcrum to lift the optical fiber segment out of the fixing portion 435 upward by a certain amplitude such that, when the optical fiber falls on the surface of the circuit board 300, it can run horizontally and buffered, thereby ensuring that the optical fiber is horizontally led out smoothly.

FIG. 10a is a first sectional structural diagram of an optical reception component according to some embodiments, and FIG. 10b is a second sectional structural diagram of an optical reception component according to some embodiments. As shown in FIGS. 10a and 10b, in some embodiments, the optical reception component 500a may include a light turning member 510a.

In some embodiments, the light turning member 510a includes an optical fiber 513, and the optical fiber 513 extends toward the optical reception chip 520a. A reflective end face 514 is formed at one end of the optical fiber 513, and the reflective end face 514 is located above the optical reception chip 520a. The reflective end face 514 is configured to reflect and change the transmission direction of the optical signal transmitted by the optical fiber 513, so as to reflect the optical signal transmitted by the optical fiber 513 to the optical reception chip 520a, thereby realizing the turning of the optical path.

In some embodiments, the optical reception chip 520a is located on the surface of the circuit board 300. The TIA 530a is located on the surface of the circuit board 300. The optical reception chip 520a and the TIA 530a are connected by wire bonding, so as to transmit the photocurrent signal converted by the optical reception chip 520a to the TIA 530a.

In some embodiments, the circuit board 300 has a large thermal expansion coefficient and the optical path on its surface is relatively poor in stability.

In some embodiments, the surface of the circuit board 300 is formed with a groove portion 308a, and a substrate 540a is disposed on a surface of the groove portion 308a. The light turning member 510a and the optical reception chip 520a are carried on a surface of the substrate 540a. A thermal expansion coefficient of the substrate 540a is relatively smaller than the thermal expansion coefficient of the circuit board 300, which thus may ensure the stability of the optical reception optical path. The light turning member 510a and the optical reception chip 520a may be fixed to the surface of the substrate 540a by optical adhesive.

In some embodiments, there is a preset distance between the reflective end face 514 and the optical reception chip 520a, such that the optical signal output by the reflective end face 514 can reach the photosensitive surface of the optical reception chip 520a.

In some embodiments, a depth in which the groove portion 308a is recessed and a thickness of the substrate 540a cooperate with each other to meet the preset distance between the reflective end face 514 and the optical reception chip 520a. At the same time, surfaces of the optical reception chip 520a and the TIA 530a are flush. In this way, the wire bonding distance between the two is shortened, which is helpful for high frequency signal transmission between the two.

In some embodiments, the light turning member 510a may include a first fiber support portion 511 and a second fiber support portion 512, between which an optical fiber 513 is clamped. The first fiber support portion 511 is thicker to facilitate clamping when the light turning member 510a is coupled. Since the preset distance between the reflective end face 514 and the optical reception chip 520a is usually small, the second fiber support portion 512 is thinner, and it is difficult to support the first fiber support portion 511, resulting in fragmentation of the second fiber support portion 512.

In some embodiments, the surface of the substrate 540a used to carry the light turning member 510a is recessed downward to form a concave surface 541, in this way, the thickness of the second optical fiber support portion 512 may be extended downward, thereby increasing the thickness of the second optical fiber support portion 512 and increasing upward supporting force of the second optical fiber support portion 512, thereby maintaining a stable transmission performance of the optical fiber sandwiched between the first optical fiber support portion 511 and the second optical fiber support portion 512.

In some embodiments, with the arrangement of the concave surface 541, a surface of the substrate 540a used to carry the optical reception chip 520a is relatively convex, forming a boss 542. The optical reception chip 520a is located on the boss 542. A height of a surface where the boss 542 is located satisfies that: the distance between the reflective end face 514 and the optical reception chip 520a meets the preset distance. At the same time, a surface of the optical reception chip 520a is flush with a surface of the TIA 530a.

In some embodiments, the concave surface 541 and the boss 542 may also be configured as two independent structures, that is, the boss 542 is located on the concave surface 541.

In some embodiments, a hard material may be selected for the second optical fiber support portion 512 to increase its supporting strength, and in this case, there is no need to form the concave surface 541.

FIG. 10c is a first sectional structural diagram of an optical reception component according to some embodiments, and FIG. 10d is a second sectional structural diagram of an optical reception component according to some embodiments. As shown in FIGS. 10c and 10d, in some embodiments, the light turning member 510a may include an optical fiber fixing portion 515. The optical fiber fixing portion 515 protects and buffers the optical fiber 513, thereby preventing the fiber from being broken. Exemplarily, the optical fiber fixing portion 515 is made of a soft gel having protecting and buffering performances.

In some embodiments, the optical fiber fixing part 515 is not disposed on the surface of the substrate 540a. The substrate 540a does not provide support for the optical fiber fixing part 515, and the optical fiber fixing part 515 is suspended relative to the substrate 540a. This can prevent the optical fiber fixing part 515 from being adhered to the optical adhesive on the surface of the substrate 540a that is used to fix the second optical fiber supporting part 512, prevent the optical fiber from escaping from the optical fiber fixing part 515, and thus ensure that the fixing part 435 continues to wrap the optical fiber.

In some embodiments, one end of the groove portion 308a extends to a position close to the TIA 530a, and the other end thereof extends to a position at a certain distance from the end of the substrate 540a, such that the optical fiber segment out of the optical fiber fixing portion 515 may reach the surface of the circuit board 300 after a certain distance. In some embodiments, the tail portion of the optical fiber fixing portion 515 may be used as a fulcrum to lift the optical fiber segment out of the optical fiber fixing portion 515 upward by a certain amplitude, and when the optical fiber falls on the surface of the circuit board 300, it may run horizontally and buffered, thereby ensuring the optical fiber is led out smoothly and horizontally.

In some embodiments, the optical fiber segment out of the optical fiber fixing portion 515 is suspended relative to the groove portion 308a, then if the optical fiber segment out of the optical fiber fixing portion 515 is lifted upward, a bending space may be provided for the optical fiber. The optical fiber is not subjected to stress in the bending space, thereby preventing fiber breakage.

FIG. 11a is an exploded structural diagram of another optical reception component according to some embodiments, and FIG. 11b is a sectional structural diagram of another optical reception component according to some embodiments. As shown in FIG. 11a and FIG. 11b, in some embodiments, the optical reception component 500b is located on a surface of the circuit board 300. The optical reception component 500b may be located side by side with the optical emission component 400a at one side of the signal processing chip 304.

In some embodiments, the structure of the optical emission component 400a may refer to the structure of the optical emission component 400a, and will not be described in detail.

In some embodiments, the optical reception component 500b may include a lens assembly 510, and the lens assembly 510 is covered on the surface of the circuit board 300. An accommodation cavity is formed between an inner wall of the lens assembly 510 and the surface of the circuit board 300. A reflective surface 511 is formed on an outer wall of the lens assembly 510. The reflective surface 511 is tilted, and its light entering surface faces the optical fiber 540b. The optical fiber 540b transmits an optical signal from the outside to the reflective surface 511. A light exiting surface of the reflective surface 511 faces the surface of the circuit board 300.

In some embodiments, the optical reception component 500b may include an optical reception chip 520b. The optical reception chip 520b is located in the accommodation cavity formed between the inner wall of the lens assembly 510 and the circuit board 300, and the optical reception chip 520b is located on the surface of the circuit board 300.

In some embodiments, the lens assembly 510 is covered above the optical reception chip 520b, and the reflective surface 511 is above the optical reception chip 520b. The reflective surface 511 may be used to turn the optical path toward the surface of the optical reception chip 520b, thereby coupling the optical signal into the optical reception chip 520b.

In some embodiments, the optical reception component 500b may include a TIA 530b. The TIA 530b is located in the accommodation cavity formed between the inner wall of the lens assembly 510 and the circuit board 300. The TIA 530b is located on the surface of the circuit board 300, and the TIA 530b is located at one side of the optical reception chip 520b.

In some embodiments, the optical reception chip 520b and the TIA 530b are electrically connected through wire bonding, such that the photocurrent signal generated by the optical reception chip 520b is transmitted into the TIA 530b, and the TIA 530b converts the photocurrent signal into a photovoltage signal and amplifies the photovoltage signal. The TIA 530b is electrically connected to the signal processing chip 304 through the surface wiring of the circuit board 300, and transmits the amplified photovoltage signal to the signal processing chip 304.

FIG. 12a is a first internal structure diagram of another optical module according to some embodiments. As shown in FIG. 12a, in some embodiments, two groups of optical emission components, that is, a first optical emission component 400b and a second optical emission component 400c, are disposed on the surface of the circuit board 300; and two groups of optical reception components, that is, a first optical reception component 500c and a second optical reception component 500d, are provided on the surface of the circuit board 300. Compared with a transmission rate of a combined configuration of the above mentioned optical emission component 400a and the optical reception component 500a, the transmission rate is doubled.

In some embodiments, the first optical emission component 400b and the second optical emission component 400c are disposed side by side on the same surface of the circuit board 300. In some embodiments, the first optical reception component 500c and the second optical reception component 500d are disposed side by side on the same surface of the circuit board 300.

In some embodiments, the first optical emission component 400b, the second optical emission component 400c, the first optical reception component 500c and the second optical reception component 500d are designed in a planar manner and are all located on the same surface of the circuit board 300.

In some embodiments, the first optical emission component 400b and the second optical emission component 400c may have the same configuration as the optical emission component 400a. The first optical reception component 500c and the second optical reception component 500d may have the same configuration as the optical reception component 500a.

FIG. 12b is a second internal structure diagram of another optical module according to some embodiments. As shown in FIG. 12b, in some embodiments, two groups of optical emission components, that is, a first optical emission component 400b and a second optical emission component 400c, are disposed on the surface of the circuit board 300. Two groups of optical reception components, that is, a first optical reception component 500e and a second optical reception component 500f, are disposed on the surface of the circuit board 300. Compared with the transmission rate of the combined configuration of the optical emission component 400a and the optical reception component 500a, the transmission rate is doubled.

In some embodiments, the first optical emission component 400b and the second optical emission component 400c are disposed side by side on the same surface of the circuit board 300. In some embodiments, the first optical reception component 500e and the second optical reception component 500f are disposed side by side on the same surface of the circuit board 300.

In some embodiments, the first optical emission component 400b, the second optical emission component 400c, the first optical reception component 500e and the second optical reception component 500f are designed in a planar manner and are located on the same surface of the circuit board 300.

In some embodiments, the first optical emission component 400b and the second optical emission component 400c may have the same configuration as the optical emission component 400a. The first optical reception component 500e and the second optical reception component 500f may have the same configuration as the optical reception component 500b.

In some embodiments, the first optical emission component 400b and the second optical emission component 400c form a dual emission configuration, which may be combined with a dual reception configuration consisting of the first optical reception component 500c and the second optical reception component 500d, and may also be combined with a dual reception configuration consisting of the first optical reception component 500e and the second optical reception component 500f.

FIG. 13a is a second internal structure diagram of another optical module according to some embodiments, and FIG. 13b is a first exploded diagram of an assembly of another optical module according to some embodiments. As shown in FIGS. 13a and 13b, in some embodiments, the first optical emission component 400b, the second optical emission component 400c, the first optical reception component 500e and the second optical reception component 500f are all located on the same surface of the circuit board 300. The space of the circuit board 300 is limited, and a reasonable design is needed such that they can be arranged on the same surface of the circuit board 300.

In some embodiments, the surface of the circuit board 300 is formed with a groove portion 308b. The groove portion 308b is arranged near an edge of the circuit board 300. A surface of the groove portion 308b is provided with a first optical reception component 500c and a second optical reception component 500d. Compared with an arrangement in which the first optical reception component 500c and the second optical reception component 500d are respectively arranged on surfaces of two independent groove portions, arranging the first optical reception component 500c and the second optical reception component 500d together on the surface of the same groove portion 308b can reduce the area dug for the groove portion 308b, thereby reducing the occupied circuit board area, and reserving more space on the circuit board for the first optical emission component 400b and the second optical emission component 400c.

In some embodiments, the first optical reception component 500c and the second optical reception component 500d may also be respectively disposed on surfaces of two independent groove portions. In this case, groove walls of the two groove portions have a certain thickness, and the two groove portions are spaced apart at a certain distance to avoid damaging a groove wall of a groove portion that have been milled during milling a groove portion. Thicknesses of adjacent groove walls of the two groove portions and the distance between the adjacent groove walls increase the occupied circuit board surface.

In some embodiments, the structural features of the first optical reception component 500c may be the same as those of the optical reception component 500a, and will not be described in detail. The structural features of the second optical reception component 500d may be the same as those of the optical reception component 500a, and will not be described in detail. The function of the groove portion 308b is the same as that of the groove portion 308a, and is configured to arrange a substrate with a smaller thermal expansion coefficient.

In some embodiments, when the first optical reception component 500c and the second optical reception component 500d are disposed on the surface of the same groove portion 308b, the distance between the first optical reception component 500c and the second optical reception component 500d is small, and the TIA 530c in the first optical reception component 500c and the TIA 530d in the second optical reception component 500d can share a pad on the surface of the circuit board 300, and the pad is located between the TIA 530c and the TIA 530d. The pad is close to the TIA 530c and the TIA 530d, which thereby may shorten the wire bonding distance between the pad and the TIA 530c or the TIA 530d.

In some embodiments, the surface of the groove portion 308b is disposed with a first substrate 540c and a second substrate 540d. The first substrate 540c is configured to carry the first light turning member 510c and the first optical reception chip 520c of the first optical reception component 500c. The second substrate 540d is configured to carry the second light turning member 510d and the second optical reception chip 520d of the second optical reception component 500d. Thermal expansion coefficients of the first substrate 540c and the second substrate 540d are both smaller than the thermal expansion coefficient of the circuit board 300.

In some embodiments, the first substrate 540c and the second substrate 540d may be connected together to form one substrate.

In some embodiments, a bottom portion of the first light turning member 510c is fixed to a surface of the first substrate 540c. The first optical reception chip 520c is disposed at an end of the first substrate 540c. Similarly, a bottom portion of the second light turning member 510d is fixed to a surface of the second substrate 540d, and the second optical reception chip 520d is disposed at an end of the second substrate 540d.

In some embodiments, a substrate is disposed on the surface of the groove portion 308b, and a partial area of the substrate is used to support the light turning member 510c and the optical reception chip 520c of the first optical reception component 500c, and a partial area of the substrate is used to support the light turning member 510d and the optical reception chip 520d of the second optical reception component 500d.

In some embodiments, a width of one end of the groove portion 308b through which the optical fiber passes is relatively reduced, so as to reserve space for the first optical emission component 400b and the second optical emission component 400c.

In some embodiments, the first substrate 540c is located on an upper surface of the circuit board 300, and the second substrate 540d is located on the upper surface or a lower surface of the circuit board 300. That is, the first substrate 540c and the second substrate 540d may be located on the same surface of the circuit board 300, or on different surfaces of the circuit board 300.

In some embodiments, in some embodiments, the optical module may include a base 700b. A surface of the base 700b carries the first optical emission component 400b and the second optical emission component 400c, that is, the first optical emission component 400b and the second optical emission component 400c are located on the same base.

In some embodiments, a surface of the base 700b is formed thereon with a first convex surface 703a and a second convex surface 703b. The first convex surface 703a and the second convex surface 703b are separated from each other. The first convex surface 703a carries the first optical emission component 400b. The second convex surface 703b carries the second optical emission component 400c. In some embodiments, the first optical emission component 400b is fixed to the first convex surface 703a through optical adhesive. The second optical emission component 400c is fixed to the second convex surface 703b through optical adhesive.

In some embodiments, a surface of the circuit board 300 is formed thereon with a first notch portion 307a and a second notch portion 307b. The first notch portion 307a and the second notch portion 307b are separated from each other and are not communicated to each other.

In some embodiments, the base 700b is embedded in and connected to the circuit board 300. The first convex surface 703a of the base 700b is inserted into the first notch portion 307a, and the second convex surface 703b is inserted into the second notch portion 307b, such that the base 700a is embedded in the surface of the circuit board 300.

In some embodiments, areas dug for the first notch portion 307a and the second notch portion 307b are minimized so that the first optical emission component 400b and the second optical emission component 400c can be disposed in a limited space.

In some embodiments, the first optical emission component 400b may include a first laser 401b. The second optical emission component 400c may include a second laser 401c.

In some embodiments, the first optical emission component 400b may include a first optical modulation chip 404b and a first optical fiber array 405b. The second optical emission component 400c may include a second optical modulation chip 404c and a second optical fiber array 405c. As mentioned above, structural features of the first optical modulation chip 404b and the second optical modulation chip 404c are the same as those of the optical modulation chip 404a, and internal input optical waveguide and output optical waveguide are arranged tilted relative to the end face.

In some embodiments, an end face of the first optical modulation chip 404b is formed with one input optical port and multiple output optical ports, and the multiple output optical ports have the same output wavelength, that is, the first optical modulation chip 404b can modulate an input beam of light that does not carry a signal internally to generate multiple optical signals with the same wavelength. Among them, the input optical port faces toward the first laser 401b to receive a beam of light that does not carry a signal output by the first laser 401b. The output optical port faces toward the first optical fiber array 405b to couple the multiple optical signals modulated by the first optical modulation chip to the first optical fiber array 405b, and these optical signals are output through the first optical fiber array 405b. Input optical waveguide and output optical waveguide of the first optical modulation chip 404b are respectively non-perpendicular to the end face of the first optical modulation chip 404b, thereby preventing the optical signal from being reflected at the end face of the first optical modulation chip 404b. The light entering end face of the first optical fiber array 405b is designed as an inclined surface, which thereby may prevent the optical signal from being reflected at the light entering end face of the first optical fiber array 405b.

In some embodiments, as lengths of the first optical fiber array 405b and the second optical fiber array 405c are large, the first optical modulation chip 404b and the second optical modulation chip 404c are tilted relative to the surface of the circuit board 300, the first laser 401b and the first optical fiber array 405b may be arranged parallel to the surface of the circuit board 300, thereby reducing an area dug for the first notch portion 307a. Similarly, the second laser 401c and the second optical fiber array 405c can also be arranged parallel to the surface of the circuit board 300, thereby also reducing an area dug for the second notch portion 307b.

In some embodiments, the first optical emission component 400b may include a first modulation driver chip 406b. The first modulation driver chip 406b is located at one side of the first optical modulation chip 404b. The first modulation driver chip 406b is electrically connected to the first optical modulation chip 404b, thereby providing a modulation drive signal to the first optical modulation chip 404b to drive the first optical modulation chip 404b to modulate the optical signal.

In some embodiments, the second optical emission component 400c may include a second modulation driver chip 406c. The second modulation driver chip 406c is located at one side of the second optical modulation chip 404c. The second modulation driver chip 406c is electrically connected to the second optical modulation chip 404c, thereby providing a modulation drive signal to the second optical modulation chip 404c to drive the second optical modulation chip 404c to perform optical signal modulation.

In some embodiments, the first convex surface 703a and the second convex surface 703b have the same structure, and the first convex surface 703a is taken as an example to illustrate its structural features.

In some embodiments, the first convex surface 703a may include a first support surface 713 to support the first optical modulation chip 404b.

In some embodiments, the first convex surface 703a may include a second support surface 723. The second support surface 723 includes a first carrying surface 733 and a second carrying surface 743. The first carrying surface 733 is configured to carry the first laser 401b. The second carrying surface 743 is configured to carry the first optical fiber array 405b.

In some embodiments, a length of the second carrying surface 743 is smaller than that of the first carrying surface 733, such that the optical fiber fixing portion of the first optical fiber array 405b is suspended relative to the second carrying surface 743, preventing the optical fiber fixing portion from being optically adhered to the second carrying surface 743, thereby ensuring that the optical fiber fixing portion continuely wraps the optical fiber.

In some embodiments, there is a gap between the first support surface 713 and the second support surface 723 to collect optical adhesive overflowed when the first optical modulation chip 404b is end-face coupled to the first optical fiber array 405b. In some embodiments, there is a gap between the first carrying surface 733 and the second carrying surface 743 to collect optical adhesive overflowed when adhering the first laser 401b and the first optical fiber array 405b.

In some embodiments, the golden finger 301 may be electrically connected to the TIA 530c and TIA 530d, respectively, and may also be electrically connected to the first modulation driver chip 406b and the second modulation driver chip 406c, respectively, such that a signal processing chip, such as a DSP chip, may be omitted. That is, a linear-drive pluggable optics (LPO) is used to reduce the power consumption of the optical module. Among them, the LPO optical module removes the DSP/CDR chip from the optical module and integrates the relevant functions into the ASIC switching chip on the apparatus side.

FIG. 13c is a second exploded view of another optical module assembly according to some embodiments. As shown in FIG. 13c, in some embodiments, the base 700b supports both the first optical emission component 400b and the second optical emission component 400c, and the base 700b has a large extension surface and a large heat dissipation area, so that more heat can be conducted through the base 700b, which improves the heat dissipation efficiency, and is more conducive to the heat dissipation of the first optical emission component 400b and the second optical emission component 400c.

In some embodiments, the first modulation driver chip 406b is located on the surface of the circuit board 300. The first modulation driver chip 406b is located outside the first notch portion 307a.

In some embodiments, the second modulation driver chip 406c is located on the surface of the circuit board 300, and the second modulation driver chip 406c is located outside the second notch portion 307b.

In some embodiments, a surface of the base 700b is provided with: a first laser 401b, a first optical modulation chip 404b, a first optical fiber array 405b, a first modulation driver chip 406b, a second laser 401c, a second optical modulation chip 404c, a second optical fiber array 405c and a second modulation driver chip 406c. The first laser 401b, the first optical modulation chip 404b, and the first optical fiber array 405b are located in the first notch portion. The second laser 401c, the second optical modulation chip 404c and the second optical fiber array 405c are located in the second notch portion.

FIG. 13d is a diagram of an assembly of a base and a circuit board according to some embodiments, and FIG. 13e is a third exploded diagram of another optical module assembly according to some embodiments. As shown in FIG. 13d and FIG. 13e, in some embodiments, the surface of the base 700b used to support the first optical emission component 400b and the second optical emission component 400c faces the lower surface of the circuit board, that is, the back surface of the circuit board, and the back surface of the circuit board faces the lower shell part 202. A bottom surface of the base 700b faces the upper surface of the circuit board, that is, the front surface of the circuit board, and the front surface of the circuit board faces the upper shell part 201.

In some embodiments, the upper shell part 201 of the optical module can form a heat dissipation duct with the cage 106 of the host computer 100, so the upper shell part 201 has a better heat dissipation effect than the lower shell part 202. When the bottom surface of the base 700b faces the upper surface of the circuit board, heat generated by the first optical emission component 400b and the second optical emission component 400c carried by the surface of the base 700b is conducted upward to the base 700b, and then conducted upward to the upper shell part 201 through the base 700b, and the heat is conducted to the outside through the heat dissipation duct. It can be seen that the heat dissipation paths of the first optical emission component 400b and the second optical emission component 400c are all the way upward, which is relatively smooth, and the heat dissipation duct of the upper shell part can be fully utilized, thereby providing a better heat dissipation manner.

FIG. 14a is a first sectional view of another optical module according to some embodiments, and FIG. 14b is a first sectional exploded view of another optical module according to some embodiments. As shown in FIG. 14a and FIG. 14b, in some embodiments, the first optical emission component 400b, the second optical emission component 400c, the first optical reception component 500c, and the second optical reception component 500d are disposed in a plane deployment manner on the same surface of the circuit board 300. Exemplarily, they are disposed in a plane deployment manner on the lower surface of the circuit board 300.

In some embodiments, the first laser 401b, the first optical modulation chip 404b and the first optical fiber array 405b are supported by the base 700b and embedded in the first notch portion 307a, which is more conducive to the heat dissipation of the first laser 401b, the first optical modulation chip 404b and the first optical fiber array 405b, and ensures the stability of the optical path.

In some embodiments, the second laser 401c, the second optical modulation chip 404c and the second optical fiber array 405c are supported by the base 700b and embedded in the second notch portion 307b. Similarly, this is more conducive to the heat dissipation of the second laser 401c, the second optical modulation chip 404c and the second optical fiber array 405c, and ensures the stability of the optical path.

In some embodiments, the golden finger 301 extends along the length direction of the circuit board 300, which is also the routing direction of the high-frequency signal line. The first optical modulation chip 404b is connected to the first modulation driver chip 406b by wire bonding, and the first modulation driver chip 406b is wire bonded to the surface of the circuit board 300 in a direction toward the golden finger 301, so as to realize high-frequency signal transmission between the first modulation driver chip 406b and the circuit board 300.

In some embodiments, the first optical modulation chip 404b is wire bonded to the surface of the circuit board 300 along a width direction of the circuit board 300 to achieve low-frequency signal transmission between the first optical modulation chip 404b and the circuit board 300. The first modulation driver chip 406b is wire bonded to the surface of the circuit board 300 along the width direction of the circuit board 300 to achieve low-frequency signal transmission between the first modulation driver chip 406b and the circuit board 300.

In some embodiments, an area of the circuit board 300 between the first optical modulation chip 404b and the second optical modulation chip 404c is a common wire bonding area. The first optical modulation chip 404b and the second optical modulation chip 404c are respectively wire bonded to the common wire bonding area to achieve electrical connection with the circuit board 300.

In some embodiments, an area of the circuit board 300 between the first modulation driver chip 406b and the second modulation driver chip 406c is a common wire bonding area. The first modulation driver chip 406b and the second modulation driver chip 406c are respectively wire bonded to the common wire bonding area to achieve electrical connection with the circuit board 300.

In some embodiments, in view of the heat dissipation, the first modulation driver chip 406b may be supported by the base 700b and embedded in the first notch portion 307a, and heat generated by the first modulation driver chip 406b is conducted through the base 700b, which is more conducive to the heat dissipation of the first modulation driver chip 406b. The second modulation driver chip 406c is arranged in the same way.

In some embodiments, a surface of the first modulation driver chip 406b is wire bonded in four directions. A surface of the first modulation driver chip 406b is wire bonded to the first optical modulation chip 404b to achieve electrical connection, and are wire bonded to the surface of the circuit board 300 in the remaining three directions. As an example, the first modulation driver chip 406b is wire bonded to the surface of the circuit board between the first notch portion 307a and the second notch portion 307b. Similarly, the second modulation driver chip 406c is wire bonded to the surface of the circuit board between the first notch portion 307a and the second notch portion 307b.

In some embodiments, in a case that the first modulation driver chip 406b and the second modulation driver chip 406c are respectively embedded in the first notch portion 307a and the second notch portion 307b, surfaces of the circuit board 300 where the first modulation driver chip 406b and the second modulation driver chip 406c are located are hollowed out, and wiring area in the inner layer of the circuit board 300 is thus reduced.

In some embodiments, in the case that the first modulation driver chip 406b and the second modulation driver chip 406c are respectively embedded in the first notch portion 307a and the second notch portion 307b, a hole-digging range of an area of the first notch portion 307a for embedding the first modulation driver chip 406b and a hole-digging range of an area of the second notch portion 307b for embedding the second modulation driver chip 406c will be expanded outward compared to a size of the first modulation driver chip 406b and a size of the second modulation driver chip 406c, respectively, to avoid mounting interference with the first modulation driver chip 406b and the second modulation driver chip 406c. In the case that the hole-digging ranges of the first notch portion 307a and the second notch portion 307b are expanded outward, the common wire bonding area between the first modulation driver chip 406b and the second modulation driver chip 406c will inevitably be reduced, causing wiring difficult. In addition, if the hole-digging range of the second notch portion 307b is expanded outward, it may exceed the edge of the circuit board 300.

In some embodiments, the first modulation driver chip 406b is located on the surface of the circuit board 300, and the first modulation driver chip 406b is located outside the first notch portion 307a. The second modulation driver chip 406c is located on the surface of the circuit board 300, and the second modulation driver chip 406c is located outside the second notch portion 307b. The inner layer of the circuit board 300 where the first modulation driver chip 406b and the second modulation driver chip 406c are located may be used for routing, which is more suitable for scenarios when the space of the circuit board 300 is limited. At the same time, in the limited space of the circuit board 300, the hole-digging ranges of the first notch portion 307a and the second notch portion 307b enable the common wire bonding area between the first optical modulation chip 404b and the second optical modulation chip 404c, and the common wire bonding area between the first modulation driver chip 406b and the second modulation driver chip 406c to meet the requirements for wire bonding.

In some embodiments, when the first optical emission component 400b, the second optical emission component 400c, the first optical reception component 500e and the second optical reception component 500f are all disposed on the surface of the circuit board 300, the first modulation driver chip 406b may be located on the surface of the circuit board 300, and the first modulation driver chip 406b is located outside the first notch portion 307a. Similarly, the second modulation driver chip 406c is located on the surface of the circuit board 300, and the second modulation driver chip 406c is located outside the second notch portion 307b.

In some embodiments, the first modulation driver chip 406b is located on the surface of the circuit board 300, and the second modulation driver chip 406c is located on the surface of the circuit board 300. The circuit board 300 is arranged between the first modulation driver chip 406b and the base 700b. A supporting area of the base 700b corresponding to the first modulation driver chip 406b is large, so as to facilitate the heat dissipation of the first modulation driver chip 406b. A heat dissipation path of the first modulation driver chip 406b is: the first modulation driver chip 406b, the circuit board 300 and the base 700b.

In some embodiments, the first optical modulation chip 404b is located on the surface of the base 700b, and the first modulation driver chip 406b is located on the surface of the circuit board 300. The first optical modulation chip 404b is embedded in the first notch portion 307a, such that a surface of the first optical modulation chip 404b is flush with a surface of the first modulation driver chip 406b, shortening wire bonding length between the surface of the first optical modulation chip 404b and the surface of the first modulation driver chip 406b, which is beneficial to high-frequency signal transmission.

FIG. 14c is a first sectional view of another optical module according to some embodiments, and FIG. 14d is a first sectional exploded view of another optical module according to some embodiments. As shown in FIG. 14c and FIG. 14d, in some embodiments, the first optical emission component 400b, the second optical emission component 400c, the first optical reception component 500c and the second optical reception component 500d are disposed in a plane deployment manner on the same surface of the circuit board 300. Exemplarily, they are disposed on the lower surface of the circuit board 300.

In some embodiments, the base 700b supports the first laser 401b, the first optical modulator chip 404b and the first optical fiber array 405b of the first optical emission component 400b, and also supports the second laser 401c, the second optical modulator chip 404c and the second optical fiber array 405c of the second optical emission component 400c.

In some embodiments, the first notch portion 307a is separated from the second notch portion 307b by the circuit board 300, and the first notch portion 307a is not communicated with the second notch portion 307b, so as to reserve a circuit board area between the first notch portion 307a and the second notch portion 307b, leaving common wire bonding area between the first optical modulation chip 404b and the second optical modulation chip 404c, and common wire bonding area between the first modulation driver chip 406b and the second modulation driver chip 406c, so as to facilitate the deployment of wiring, such that the first optical emission component 400b, the second optical emission component 400c, the first optical reception component 500c and the second optical reception component 500d can be deployed on the same surface of the circuit board 300 in the plane development manner.

In some embodiments, the first notch portion 307a is communicated with the second notch portion 307b, that is, the two constitute a single notch portion. This arrangement is suitable for the scenario where there is no need for a common wire bonding area between the first optical modulation chip 404b and the second optical modulation chip 404c, and there is no need for a common wire bonding area between the first modulation driver chip 406b and the second modulation driver chip 406c. For example, wire bonding pads for low-frequency signal transmission in the first optical modulation chip 404b and the second optical modulation chip 404c are mirror-imaged, the first optical modulation chip 404b is wire bonded toward one edge of the circuit board 300, and the second optical modulation chip 404c is wire bonded toward the other edge of the circuit board 300. The first modulation driver chip 406b is designed in the same way as the second modulation driver chip 406c.

FIG. 15 is a layout structure diagram of another optical module according to some embodiments. As shown in FIG. 15, in some embodiments, a first optical reception component 500e and a second optical reception component 500f are disposed on the surface of the circuit board 300. In some embodiments, the first optical reception component 500e and the second optical reception component 500f can adopt the configuration of the optical reception component 500b.

In some embodiments, the first optical reception component 500e may include a first lens assembly 510e. The first lens assembly 510e is covered on the surface of the circuit board 300, and a first reflective surface is formed on a surface of the first lens assembly 510e. The first optical reception component 500e may include a first optical reception chip, which is located on the surface of the circuit board and in a reflective optical path of the first reflective surface. For more details, reference may be made to the configuration of the optical reception component 500b.

In some embodiments, the second optical reception component 500f may include a second lens assembly 510f.

In some embodiments, the first lens assembly 510e and the second lens assembly 510f are large in size, and it may not be suitable to arrange them side by side along the width direction of the circuit board 300. In some embodiments, the first lens assembly 510e and the second lens assembly 510f are arranged on the same surface of the circuit board 300 in a staggered manner, which may fully utilize the space of the circuit board 300 to arrange the two, and may also prevent the optical fiber array connected with the first lens assembly 510e from passing through the second lens assembly 510f.

In some embodiments, the second lens assembly 510f is covered on the surface of the circuit board 300 to form an encapsulated cavity with the surface of the circuit board 300. A second reflective surface is formed on a surface of the second lens assembly 510f.

In some embodiments, the second optical reception component 500f may include an optical reception chip 520f. The optical reception chip 520f is located in the encapsulated cavity formed by the second lens assembly 510f and the circuit board 300. The optical reception chip 520f is located on the surface of the circuit board 300 and is covered by the second lens assembly 510f. The optical reception chip 520f is located in a reflective optical path of the second reflective surface.

In some embodiments, the second optical reception component 500f may include a TIA 530f. The TIA 530f is located at one side of the optical reception chip 520f. The TIA 530f is located in an encapsulated cavity formed by the second lens assembly 510f and the circuit board 300. The TIA 530f is located on the surface of the circuit board 300 and is covered by the second lens assembly 510f.

In some embodiments, a reflective surface 511f is formed on a surface of the second lens assembly 510f. The reflective surface 511f is located above the optical reception chip 520f. The reflective surface 511f may turn the optical path from a transmission direction parallel to the surface of the circuit board 300 to the surface of the optical reception chip 520f, thereby coupling the optical signal into the optical reception chip.

In some embodiments, the circuit board 300 has a large thermal expansion coefficient and an optical path on its surface has a poor stability. The surface of the circuit board 300 is formed with a groove 309, and a substrate 521 is disposed on a surface of the groove 309. A surface of the substrate 521 carries the optical reception chip 520f. The thermal expansion coefficient of the substrate 521 is relatively smaller than the thermal expansion coefficient of the circuit board 300, thereby ensuring the stability of the optical path transmission of the optical reception chip 520f.

In some embodiments, a thickness of the substrate 521 allows a surface of the optical reception chip 520f to be flush with a surface of the TIA 530f, thereby shortening the wire bonding length between the substrate 521 and the TIA 530f.

In some embodiments, the first optical reception component 500e may have the same configuration as the second optical reception component 500f.

FIG. 16 is a side structural diagram of another optical module according to some embodiments. As shown in FIG. 16, in some embodiments, the first optical emission component 400d and the second optical emission component 400e are arranged toward one surface of the circuit board, and the first optical reception component 500g and the second optical reception component 500h are arranged toward the other surface of the circuit board. The upper and lower deployment can fully utilize packaging spaces of the upper and lower surfaces of the circuit board 300.

In some embodiments, the first optical emission component 400d and the second optical emission component 400e are disposed toward the upper surface of the circuit board, and the first optical reception component 500g and the second optical reception component 500h are disposed toward the lower surface of the circuit board.

In some embodiments, the first optical emission component 400d and the second optical emission component 400e are located in a cavity formed by the circuit board 300 and the upper shell part 201.

In some embodiments, the first optical reception component 500g and the second optical reception component 500h are located in a cavity formed by the circuit board 300 and the lower shell part 202.

In some embodiments, surfaces of the first optical emission component 400d and the second optical emission component 400e are covered with a protective cover 400f to protect the first optical emission component 400d and the second optical emission component 400e.

FIG. 17 is a sectional structural diagram of another optical module according to some embodiments. As shown in FIG. 17, in some embodiments, the optical module may include a base 800. The base 800 is embedded in the circuit board 300, and the base 800 is fixed on the circuit board 300.

In some embodiments, a surface of the base 800 faces the upper shell part 201, and the surface is configured to support the first optical emission component 400d and the second optical emission component 400e. Exemplarily, the surface is the top surface of the base 800.

In some embodiments, another surface of the base 800 faces the lower shell part 202, and the surface is configured to support the first optical reception component 500g and the second optical reception component 500h. Exemplarily, the surface is the bottom surface of the base 800.

FIG. 18 is a first structural diagram of the upper surface of the circuit board according to some embodiments, and FIG. 19 is a second structural diagram of the upper surface of the circuit board according to some embodiments. As shown in FIG. 18 and FIG. 19, in some embodiments, the first optical emission component 400d and the second optical emission component 400e are arranged toward the upper surface of the circuit board 300. The surfaces of the first optical emission component 400d and the second optical emission component 400e are covered with a protective cover 400f.

In some embodiments, the first optical emission component 400d and the second optical emission component 400e are located on a surface of the base 800 facing the upper shell part 201.

In some embodiments, a first signal processing chip 304a is disposed at one side of the first optical emission component 400d, and a second signal processing chip 304b is disposed at one side of the second optical emission component 400e. In this way, high-frequency signal crosstalk between the first optical emission component 400d and the second optical emission component 400e may be avoided.

FIG. 20 is a first structural diagram of a lower surface of a circuit board according to some embodiments. As shown in FIG. 20, in some embodiments, the first optical reception component 500g and the second optical reception component 500h are arranged toward the lower surface of the circuit board 300. The surfaces of the first optical reception component 500g and the second optical reception component 500h are covered with a cover plate 305a.

In some embodiments, the first optical reception component 500g and the second optical reception component 500h are located on a surface of the base 800 facing the lower shell part 202.

FIG. 21 is a second structural diagram of a lower surface of a circuit board according to some embodiments. As shown in FIG. 21, in some embodiments, the first optical reception component 500i and the second optical reception component 500j are disposed toward the lower surface of the circuit board 300.

In some embodiments, the first optical emission component 400d and the second optical emission component 400e are located in a cavity formed by the circuit board 300 and the upper shell part 201. The first optical reception component 500i and the second optical reception component 500j are located in a cavity formed by the circuit board 300 and the lower shell part 201.

In some embodiments, the first optical emission component 400d and the second optical emission component 400e are located on a surface of the base 800 facing the upper shell part 201. The first optical reception component 500g and the second optical reception component 500h are located on a surface of the base 800 facing the lower shell part 202. Exemplarily, the first optical reception component 500g and the second optical reception component 500h adopt a micro-optical packaging solution.

In some embodiments, the first optical emission component 400d and the second optical emission component 400e are located on a surface of the base 800 facing the upper shell part 201. The first optical reception component 500i and the second optical reception component 500j are located on the lower surface of the circuit board 300. Exemplarily, the first optical reception component 500i and the second optical reception component 500j adopt a COB packaging solution.

In some embodiments, the optical fiber ribbons in the first optical reception component 500i and the second optical reception component 500j shuttle along a surface of the base 800 toward the lower shell part 202.

FIG. 22 is an exploded view of another optical module according to some embodiments. As shown in FIG. 22, in some embodiments, a surface of the circuit board 300 is formed with a first notch portion 307c and a second notch portion 307d. A first signal processing chip 304a is disposed at one side of the first notch portion 307c, and a second signal processing chip 304b is disposed at one side of the second notch portion 307d.

In some embodiments, the first notch portion 307c and the second notch portion 307d are independent of each other and are not communicated with each other, so as to reserve a wire bonding space on a surface of the circuit board 300 between the first notch portion 307c and the second notch portion 307d.

In some embodiments, a top surface of the base 800 is formed with a first convex surface 810 and a second convex surface 820. The first convex surface 810 is inserted into the first notch portion 307c, and the second convex surface 820 is inserted into the second notch portion 307d, and thus the base 800 is embedded on the circuit board 300.

In some embodiments, the first convex surface 810 is configured to support the first optical emission component 400d, and the second convex surface 820 is configured to support the second optical emission component 400e. The first convex surface 810 is inserted into the first notch portion 307c, such that the first optical emission component 400d is disposed toward the upper surface of the circuit board 300. The second convex surface 820 is inserted into the second notch portion 307d, such that the second optical emission component 400e is disposed toward the upper surface of the circuit board 300. The base 800 has excellent heat dissipation characteristics, and the base 800 can conduct the heat generated by the first optical emission component 400d and the second optical emission component 400e.

FIG. 23a is a diagram of an assembly structure on an upper surface of a circuit board according to some embodiments, and FIG. 23b is an exploded diagram of an assembly of a base and an optical emission component according to some embodiments. As shown in FIG. 23a and FIG. 23b, in some embodiments, the first optical emission component 400d is embedded in the first notch portion 307c via the base 800, and the second optical emission component 400e is embedded in the second notch portion 307d via the base 800.

In some embodiments, the first optical emission component 400d may include a first laser 401d. The first optical emission component 400d may include a first lens 402d. The first optical emission component 400d may include a first isolator 403d. The first optical emission component 400d may include a first optical modulation chip 404d. The first optical emission component 400d may include a first optical fiber array 405d. The first optical emission component 400d may include a first modulation driver chip 406d. A principle of the optical path may refer to that of the first optical emission component 400b.

In some embodiments, the second optical emission component 400e may include a second laser 401e. The second optical emission component 400e may include a second lens 402e. The second optical emission component 400e may include a second isolator 403e. The second optical emission component 400e may include a second optical modulation chip 404e. The second optical emission component 400e may include a second optical fiber array 405e. The second optical emission component 400e may include a second modulation driver chip 406e. A principle of the optical path may refer to that of the first optical emission component 400b.

In some embodiments, the first isolator 403d is disposed at an input optical port of the first optical modulation chip 404d, and a light output by the first isolator 403d is incident to the first optical modulation chip 404d through the air.

In some embodiments, an optical refractive index matching adhesive is provided between an end face of the first optical fiber array 405d and an end face of the first optical modulation chip 404d, and an optical signal modulated by the first optical modulation chip 404d is coupled into the first optical fiber array 405d through the optical refractive index matching adhesive.

In some embodiments, a surface of the first modulation driver chip 406d is wire bonded in four directions. A surface of the first modulation driver chip 406d is wire bonded to the first optical modulation chip 404d, and is wire bonded to the circuit board 300 in the remaining three directions, for example, wire bonded to a surface of the circuit board 300 between the first notch portion 307c and the second notch portion 307d. Similarly, the second modulation driver chip 406e is wire bonded to the surface of the circuit board 300 between the first notch portion 307c and the second notch portion 307d, so the first optical emission component 400d is embedded in the first notch portion 307c, and the second optical emission component 400e is embedded in the second notch portion 307d.

In some embodiments, the second convex surface 820 may include a first support surface 821. The first support surface 821 supports the second laser 401e, the second lens 402e, the second isolator 403e and the second optical fiber array 405e.

In some embodiments, the second convex surface 820 may include a second support surface 822. The second support surface 822 supports the second optical modulation chip 404e.

In some embodiments, the second convex surface 820 may include a third support surface 823. The third support surface 823 supports the second modulation driver chip 406e.

FIG. 23c is a structural diagram of a first optical emission component according to some embodiments. As shown in FIG. 23c, in some embodiments, the first optical modulation chip 404d is coupled to the first optical fiber array 405d through their end faces.

In some embodiments, light entering and exiting end face of the first optical modulation chip 404d includes an input optical port 414d and an output optical port 424d. The input optical port 414d and the output optical port 424d are located on the same end face. The input optical port 414d faces the first isolator 403d. The output optical port 424d faces the first optical fiber array 405d.

In some embodiments, an input optical waveguide corresponding to the input optical port 414d is vertically arranged relative to the light entering end face of the first optical modulation chip 404d, and an output optical waveguide corresponding to the output optical port 424d is tilted relative to the light exiting end face of the first optical modulation chip 404d.

In some embodiments, the light entering and exiting end face of the first optical modulation chip 404 d is arranged perpendicular to the long side of the circuit board 300.

In some embodiments, the first laser 401d, the first lens 402d, and the first isolator 403d are vertically arranged relative to the light entering end face of the first optical modulation chip 404d, such that light output axis of the first laser 401d is consistent with light input axis of the first optical modulation chip 404d, so as to improve coupling efficiency of light source emitted by the first laser 401d to the input optical waveguide.

In some embodiments, the first optical fiber array 405d is tilted relative to the light exiting end face of the first optical modulation chip 404d such that light input axis of the first optical fiber array 405d is consistent with the light output axis of the first optical modulation chip 404d to improve the coupling efficiency between the first optical modulation chip 404d and the first laser 401d.

In some embodiments, a light entering end face of the first optical fiber array 405d is designed as a bevel, and a light entering end face of its internal optical fiber is also set as a bevel to prevent an optical signal incident into the first optical fiber array 405d from returning to the first optical modulation chip 404d, thereby improving the return loss and allowing more light to be transmitted in the optical fiber. Exemplarily, the light entering end face of the optical fiber array 405a is polished into a bevel with an angle of 8°.

In some embodiments, the first optical fiber array 405d is relatively long and is tilted relative to the light exiting end face of the first optical modulation chip 404d. The first notch portion 307c has a large hole-digging area to accommodate tilted arrangement of the first optical fiber array 405d. Similarly, the second notch portion 307d has a large hole-digging area to accommodate tilted arrangement of the second optical fiber array 405e. This results in reduction of available space on the upper surface of the circuit board 300, making it difficult to deploy the first optical reception component 500g and the second optical reception component 500h on the upper surface of the circuit board 300.

FIG. 24 is a diagram of assembly structures on top and bottom surfaces of a base according to some embodiments. As shown in FIG. 24, in some embodiments, the base 800 support the circuit board 300 on both ends of the top surface thereof, and thus the circuit board 300 is embedded on the base 800.

In some embodiments, the second convex surface 820 is configured to support the second optical emission component 400e. The second convex surface 820 is inserted into the second notch portion 307d, so that the second optical emission component 400e is disposed toward the upper surface of the circuit board 300.

In some embodiments, since the first optical reception component 500g and the second optical reception component 500h are located in the cavity formed by the circuit board 300 and the lower shell part 201, the upper surface of the circuit board 300 has a large hole-digging area for the first notch portion 307c and the second notch portion 307d, therefore the first modulation driver chip 406d may be arranged on the surface of the base 800 and embedded in the first notch portion 307c, and the second modulation driver chip 406e is arranged on the surface of the base 800 and embedded in the second notch portion 307d, which is beneficial to the heat dissipation of the first modulation driver chip 406d and the second modulation driver chip 406e.

In some embodiments, the second optical fiber array 405e is located on the first support surface 821, the second optical modulation chip 404e is located on the second support surface 822, and the second modulation driver chip 406e is located on the third support surface 823.

In some embodiments, the height of the third support surface 823 is designed such that the surface of the second modulation driver chip 406e flushes with the surface of the circuit board 300, or is as close as possible to the surface of the circuit board 300, so as to shorten the wire bonding length between the surface of the second modulation driver chip 406e and the surface of the circuit board 300. The second modulation driver chip 406e is electrically connected to the second signal processing chip through the wiring on the surface of the circuit board 300.

In some embodiments, a height difference between the third support surface 823 and the second support surface 822 is designed such that the optical axes of the second modulation driver chip 406e is consistent with that of the second optical modulation chip 404e. A height difference between the second support surface 822 and the first support surface 821 is designed such that the optical axes of the second optical modulation chip 404e is consistent with that of the second optical fiber array 405e.

In some embodiments, the second optical fiber array 405e is adhered to the first support surface 821 via adhesive. The second optical modulation chip 404e is adhered to the second support surface 822 via adhesive. A groove 824 is formed between the first support surface 821 and the second support surface 822 to collect adhesive overflowing from the first support surface 821 and the second support surface 822, and adhesive overflowing when an end face of the second optical fiber array 405e is coupled with an end face of the second optical modulation chip 404e.

In some embodiments, the top surface of the base 800 is configured to carry the first optical emission component 400d and the second optical emission component 400e. The bottom surface of the base 800 is configured to carry a first light turning member of the first optical reception component 500g and a second light turning member of the second optical reception component 500h. The top and bottom surfaces of the base 800 are fully utilized to achieve three-dimensional deployment and integrated deployment, which is more conducive to wiring and more conducive to reducing the occupied circuit board space.

In some embodiments, a first optical emission component may be disposed on the top surface of the base 800. A first optical reception component may be disposed on the bottom surface of the base 800. For specific structures, reference may be made to the case in which the top surface of the base 800 is used to carry the first optical emission component and the second optical emission component, the bottom surface of the base 800 is used to carry the first light turning member of the first optical reception component and the second light turning member of the second optical reception component. The packaging structures may be mutually referenced and will not be described in detail.

FIG. 25 is a diagram of an assembly structure on a bottom surface of a base according to some embodiments. As shown in FIG. 25, in some embodiments, the bottom surface of the base 800 carries optical devices, in this case, both the top and bottom surfaces of the base 800 carry optical devices, making full use of the base 800.

In some embodiments, the first optical reception component 500g may include a first light turning member 510g. The first optical reception component 500g may include a first converging lens 520g. The first optical reception component 500g may include a first optical reception chip array 530g. The first optical reception component 500g may include a first TIA 540g.

In some embodiments, the second optical reception component 500h may include a second light turning member 510h. The second optical reception component 500g may include a second converging lens 520h. The second optical reception component 500h may include a second optical reception chip array 530h. The second optical reception component 500h may include a second TIA 540h.

In some embodiments, the first light turning member 510g and the second light turning member 510h are located on the bottom surface of the base 800. The first TIA 540g and the second TIA 540h are located on the surface of the circuit board 300.

In some embodiments, as the communication rate increases, the overall power consumption of the optical module increases, and the heat dissipation demand increases accordingly. At present, air cooling, liquid cooling and other methods may be used for heat dissipation. According to the heat exchange manner, the liquid cooling method includes immersion type of liquid cooling, spraying type of liquid cooling and the like. In immersion and spraying types of liquid cooling systems, heat exchanges are achieved through direct contact between the cooling medium and the heat dissipation device. In the immersion type of liquid cooling system, the host computer together with the optical module are directly immersed in the cooling medium; the cooling medium absorbs the heat generated by the heat dissipation device and transfers the heat to the water for the heat exchange, and then the heat is transferred to the heat dissipation device through the water circulation. Exemplarily, the cooling medium is a refrigerant, such as a fluorinated liquid.

In some embodiments, the surfaces of the first optical reception component 500g and the second optical reception component 500h are covered with a cover plate 305a.

In some embodiments, the cover plate 305a may extend along the surfaces of the first optical reception component 500g and the second optical reception component 500h and bend toward the surface of the circuit board 300 to cover and wrap the first optical reception component 500g and the second optical reception component 500h, to prevent the cooling medium from entering the first optical reception component 500g and the second optical reception component 500h and affecting their optical paths.

In some embodiments, when liquid cooling is used to dissipate heat from the optical module, the cooling medium used in the liquid cooling may affect the optical path. To this end, a protective cover 400f is arranged on the surfaces of the first optical emission component 400d and the second optical emission component 400e, thereby wrapping the first optical emission component 400d and the second optical emission component 400e to prevent the cooling medium from entering first optical emission component and the second optical emission component and affecting their optical paths.

In some embodiments, in order to protect the first optical reception component 500g and the second optical reception component 500h, the base 800 includes an enclosure 830. A cover plate 305a is arranged above the first optical reception component 500g and the second optical reception component 500h, one end of the cover plate 305a is placed on a body surface of the base 800, and the other end thereof is arranged on the surface of the enclosure 830. The first optical reception component 500g and the second optical reception component 500h are located in the encapsulated cavity formed by the cover plate 305a and the enclosure 830, so as to prevent the cooling medium from entering the first optical reception component and the second optical reception component, during liquid cooling and heat dissipation, and affecting their optical paths.

In some embodiments, the enclosure 830 is placed on the surface of the circuit board 300 and exposes the surface of the circuit board 300 surrounded by the enclosure 830, so that the first optical reception chip array and the second optical reception chip array are located on the surface of the circuit board surrounded by the enclosure 380.

In some embodiments, the enclosure 830 is formed at one side of the first optical reception component 500g and the second optical reception component 500h. The enclosure 830 may be a C-shaped frame. The enclosure 830 encloses the first optical reception component 500g and the second optical reception component 500h to support the cover plate 305a, such that the cover plate 305a is covered on surfaces of the first optical reception component 500g and the second optical reception component 500h, to thereby prevent the cooling medium from entering the first optical reception component 500g and the second optical reception component 500h and affecting their optical paths.

In some embodiments, the cover plate 305a is covered on a bottom surface of a body structure of the base 800 and a bottom surface of the enclosure 830, thereby covering on the surfaces of the first optical reception component 500g and the second optical reception component 500h.

In some embodiments, one end of the cover plate 305a is covered on the bottom surface of the body structure of the base 800, and the other end thereof is covered on the bottom surface of the enclosure 830, so as to shield the first optical reception component 500g and the second optical reception component 500h. The first optical reception component 500g and the second optical reception component 500h are located in the encapsulated cavity formed by the cover plate 305a and the enclosure 830, so as to prevent the cooling medium from entering the first optical reception component 500g and the second optical reception component 500h and affecting their optical paths.

In some embodiments, an embedding groove 850 is formed along the bottom surface of the body structure of the base 800 and the bottom surface of the enclosure 830 to embed the cover plate 305a in the surface of the body structure of the base 800 and the surface of the enclosure 830, thereby fixing the cover plate 305a to the bottom surface of the base 800.

In some embodiments, the embedding groove 850 is shape matching with the cover plate 305a to fix the cover plate 305a to the base 800. FIG. 26a is a diagram of an assembly structure of a first light turning member and a first converging lens according to some embodiments, and FIG. 26b is an exploded diagram of an assembly of a first light turning member and a first converging lens according to some embodiments. As shown in FIG. 26a and FIG. 26b, in some embodiments, the first light turning member 510g is fixedly connected with the first converging lens 520g.

In some embodiments, the first light turning member 510g may include a first fiber support portion 511g and a second fiber support portion 512g. An optical fiber 513g is clamped between the first fiber support portion 511g and the second fiber support portion 512g. The first fiber support portion 511g is relatively thick to facilitate clamping and coupling of the first light turning member 510g.

In some embodiments, a reflective end face 514g is formed at one end of the optical fiber 513g, and the reflective end face 514g is located above the first optical reception chip array 530g. The reflective end face 514g is configured to reflect and change the transmission direction of the optical signal transmitted by the optical fiber 513g, so as to reflect the optical signal transmitted in the optical fiber 513g to the first optical reception chip array 530g. In an exemplary embodiment, the reflective end face 514g is an inclined surface, and a received optical signal transmitted by the optical fiber 513g is totally reflected at the reflective end face 514g. Exemplarily, an inclination angle of the reflective end face 514g is 46-50°, for example, the inclination angle is 48°.

In some embodiments, an end face of the first optical fiber support portion 511g is formed with a protective surface 516g, which surrounds the reflective end face 514g and is configured to protect the reflective end face 514g. Exemplarily, the protective surface 516g is an inclined surface, and an inclination angle of the protective surface 516g is 46-50°, such as 48°.

In some embodiments, the reflective end face 514g and the protective face 516g are formed through grinding and polishing. The end face of the optical fiber 513g is ground to a tilt angle to form the reflective end face 514g. The optical fiber 513g is cylindrical, and the cross section of the reflective end face 514g after grinding is elliptical, so a bottom of the optical fiber 513g is exposed relative to the first optical fiber support portion 511g. The optical fiber 513g is soft, and an optical fiber segment exposed relative to the first optical fiber support portion 511 may be broken if it is not protected.

In some embodiments, the first light turning member 510g may include an optical fiber fixing portion 515g. The optical fiber fixing portion 515g is located in a space below the first optical fiber support portion 511g and enclosed by the first optical fiber support portion and one end of the second optical fiber support portion 512g. The optical fiber fixing portion 515g protects and buffers the optical fiber 513g. The optical fiber fixing portion 515g may be made of a soft gel to protect and buffer the optical fiber 513g.

In some embodiments, there is a preset distance, such as a first preset value, between the reflective end face 514g and the first optical reception chip array 530g, to ensure that an optical signal reflected by the reflective end face 514g falls within a photosensitive surface range of an optical reception chip of the first optical reception chip array 530g. Exemplarily, the first preset value is small, such as 0.02 mm.

In some embodiments, since the top and bottom surfaces of the base 800 both support optical devices, it is required that the base 800 has strong supporting capability to ensure the stability of the optical paths.

In some embodiments, the first converging lens 520g is fixed on a surface of the second optical fiber support portion 512g facing toward the first optical reception chip array 530g. The second optical fiber support portion 512g extends to below the reflective end face 514g, such that the first converging lens 520g is located between the reflective end face 514g and the first optical reception chip array 530g, and a light exiting surface of the first converging lens 520g faces the first optical reception chip array 530g. The first converging lens 520g converges the optical signal reflected from the reflective end face 514g, such that the optical signal reflected from the reflective end face 514g falls within the photosensitive surface range of the optical reception chip of the first optical reception chip array 530g. In this way, the reflective end face 514g may be arranged away from the surface of the circuit board 300, and a distance between the reflective end face 514g and the first optical reception chip array 530g may be increased, thereby increasing a thickness between the top and bottom surfaces of the base 800, and increasing the support degree of the base 800 for the optical devices, and ensuring the stability of the optical paths.

In some embodiments, the first converging lens 520g converges the optical signal reflected from the reflective end face 514g to compensate for an optical path difference from the reflective end face 514g to the first optical reception chip array 530g caused by increasing the thickness of the base 800, such that the optical signal reflected from the reflective end face 514g falls within the photosensitive surface range of the optical reception chip of the first optical reception chip array 530g.

In some embodiments, the thickness of the base 800 may ensure that the first converging lens 520g is disposed between the reflective end face 514g and the first optical reception chip array 530g, and ensure a focal length from the first converging lens 520g to the first optical reception chip array 530g.

In some embodiments, the second optical fiber support portion 512g extends to below the reflective end face 514g to wrap the reflective end face 514g to prevent fiber breakage.

In some embodiments, the protective surface 516g, the reflective end face 514g and the end face of the second optical fiber support portion 512g have the same gradient. The protective surface 516g and the second optical fiber support portion 512g are designed to adapt to the gradient of the reflective end face 514g.

In some embodiments, the first optical reception chip array 530g may be located on a surface of the first TIA 540g, then the first optical reception chip array 530g is at a distance from the surface of the circuit board 300, and thus the reflective end face 514g may be further away from the surface of the circuit board 300, further increasing the distance between the reflective end face 514g and the first optical reception chip array 530g, thereby increasing the thickness between the top and bottom surfaces of the base 800, and increasing the supporting capacity of the base 800 for the optical devices. At the same time, the distance between the first optical reception chip array 530g and the first converging lens 520g may be shortened to increase the coupling efficiency. It is also beneficial to the high-frequency signal transmission performance between the first optical reception chip array 530g and the first TIA 540g.

FIG. 27 is a diagram of an assembly structure on a bottom surface of a base according to some embodiments, FIG. 28 is a sectional diagram of an assembly on a bottom surface of a base according to some embodiments, and FIG. 29 is a structural diagram of a bottom surface of a base according to some embodiments. As shown in FIGS. 27-29, in some embodiments, the bottom surface of the base 800 carries a first light turning member 510g and a second light turning member 510h.

In some embodiments, the surface where the second optical fiber support portion 512g is located is recessed relative to the surface through which the optical fiber 513g passes, thereby providing bending space for the optical fiber 513g to avoid fiber breakage.

In some embodiments, the optical fiber 513g passes through the inside of the optical fiber fixing portion 515g. The second optical fiber support portion 512g is adhered to the surface of the base 800 via gluing.

In some embodiments, a groove 840 is formed on one side of the surface where the second optical fiber support portion 512g is located. The optical fiber fixing portion 515g is disposed and extended from the position of the groove 840. The groove 840 can make the surface where the optical fiber fixing portion 515g is located lower than the surface where the second optical fiber support portion 512g is located, thereby preventing the optical fiber fixing portion 515g from gluing to the surface where the second optical fiber support portion 512g is located, and maintaining wrapping force of the optical fiber fixing portion 515g on the optical fiber 513g.

In some embodiments, a spacing portion 860 is formed on the bottom surface of the base 800. The spacing portion 860 may be located in a middle position, dividing the surface through which the optical fiber 513g passes into a first channel 870 and a second channel 880, so as to provide shuttle channels for optical fiber ribbons of the first optical reception component 500g and the second optical reception component 500h, respectively, to avoid fiber winding.

FIG. 30 is a first sectional structural diagram of another optical module according to some embodiments, FIG. 31 is a second sectional structural diagram of another optical module according to some embodiments, and FIG. 32 is a partial sectional diagram of another optical module according to some embodiments. As shown in FIGS. 30-32, in some embodiments, the first optical emission component 400d and the second optical emission component 400e are located on the surface of the base 800 facing toward the upper shell part 201. The first optical reception component 500i and the second optical reception component 500j are located on the lower surface of the circuit board 300.

In some embodiments, the first optical reception component 500i may include a first lens assembly 510i. The first lens assembly 510i is located at one side of the base 800. The first lens assembly 510i is covered to the lower surface of the circuit board 300.

In some embodiments, the second optical reception component 500j may include a second lens assembly 510j. The second lens assembly 510j is located at one side of the base 800. The second lens assembly 510j is covered to the lower surface of the circuit board 300.

In some embodiments, optical fiber ribbons of the first optical reception component 500i and the second optical reception component 500j shuttle through the surface of the base 800 toward the lower shell part 202.

In some embodiments, the first optical reception component 500i and the second optical reception component 500j may have the same structure. In some embodiments, their structures may be the same as that of the optical reception component 500b. In some embodiments, their structures may be the same as that of the second optical reception component 500f. No further introduction will be given.

In some embodiments, the top surface of the base 800 is configured to carry the first optical emission component 400d and the second optical emission component 400e. The first optical reception component 500i and the second optical reception component 500j are located on the lower surface of the circuit board, which realizes three-dimensional and integrated deployment, which is more conducive to the wiring and to reduce the occupied circuit board space.

In some embodiments, a first optical emission component 400d may also be disposed on the top surface of the base 800. A first optical reception component 500i is located on the lower surface of the circuit board. For the specific structure, reference may be made to a case in which the top surface of the base 800 is configured to carry the first optical emission component 400d and the second optical emission component 400e, and the first optical reception component 500i and the second optical reception component 500j are located on the lower surface of the circuit board. The packaging structures can be mutually referenced and will not be described in detail.

The above only illustrates specific embodiments of the present disclosure, but the protection scope of the present disclosure is not limited thereto. Any changes or substitutions that may be thought of by any person skilled in the art within the technical scope disclosed in the present disclosure should be included in the protection scope of the present disclosure. Therefore, the protection scope of the present disclosure should be based on the protection scope of the claims.

## Claims

1. An optical module, comprising:
a circuit board, the circuit board having a first notch portion and a second notch portion;
a base, a surface of which is disposed with a first optical emission component and a second optical emission component, wherein
the first optical emission component comprises:
a first laser disposed on a surface of the base and located in the first notch portion, the first laser being configured to output a light that does not carry a signal;
a first optical modulation chip located in the first notch portion and configured to modulate the light that does not carrying a signal to generate an optical signal;
a first optical fiber array located in the first notch portion, an end face of the first optical fiber array being coupled to an end face of the first optical modulation chip to transmit the optical signal;
a first modulation driver chip electrically connected to the first optical modulation chip and wire bonded to a surface of the circuit board between the first notch portion and the second notch portion; and
the second optical emission component comprises:
a second laser disposed on a surface of the base and located in the second notch portion, the second laser being configured to output a light that does not carry a signal;
a second optical modulation chip located in the second notch portion and configured to modulate the light that does not carrying a signal to generate an optical signal;
a second optical fiber array located in the second notch portion, an end face of the second optical fiber array being coupled to an end face of the second optical modulation chip to transmit the optical signal;
a second modulation driver chip electrically connected to the second optical modulation chip and wire bonded to a surface of the circuit board between the first notch
portion and the second notch portion;
a first optical reception component that is disposed on one side of the circuit board and comprises:
a light turning member disposed on the side of the circuit board, an end face of the light turning member being formed with a first reflective end face;
a first optical reception chip disposed on one side surface of the circuit board and located in a reflective optical path of the first reflective end face;
a second optical reception component that is disposed on one side of the circuit board and comprises:
a second light turning member disposed on the side of the circuit board, an end face of the second light turning member being formed with a second reflective end face;
a second optical reception chip disposed on one side surface of the circuit board and located in a reflective optical path of the second reflective end face;
or, the first optical reception component comprises:
a first lens assembly covered on a surface of the circuit board, a surface of the first lens assembly being formed with a first reflective surface;
a first optical reception chip located on a surface of the circuit board and in a reflective optical path of the first reflective surface; and
the second optical reception component that is disposed on a surface of the circuit board comprises:
a second lens assembly covered on a surface of the circuit board, a surface of the second lens assembly being formed with a second reflective surface;
a second optical reception chip located on a surface of the circuit board and in a reflective optical path of the second reflective surface.

2. The optical module according to claim 1, wherein a first substrate and a second substrate are disposed on a surface of the circuit board, and wherein the first light turning member is disposed on a surface of the first substrate, and a thermal expansion coefficient of the first substrate is smaller than a thermal expansion coefficient of the circuit board; the first optical reception chip is disposed on the surface of the first substrate; and
the second light turning member is arranged on a surface of the second substrate, and a thermal expansion coefficient of the second substrate is smaller than the thermal expansion coefficient of the circuit board; the second optical reception chip is arranged on the surface of the second substrate.

3. The optical module according to claim 2, wherein a first lens and a first isolator are disposed between the first laser and the first optical modulation chip; the first isolator is arranged at an input optical port of the first optical modulation chip, and a light output by the first isolator is incident on the first optical modulation chip through the air;
an optical refractive index matching adhesive is provided between the end face of first optical fiber array and the end face of the first optical modulation chip, and the optical signal modulated by the first optical modulation chip is coupled into the first optical fiber array through the optical refractive index matching adhesive.

4. The optical module according to claim 2, wherein the surface of the base is formed with a first convex surface and a second convex surface, wherein the first convex surface is embedded in the first notch portion to carry the first optical emission component, and the second convex surface is embedded in the second notch portion to carry the second optical emission component; and
the first optical fiber array comprises:
a first support portion;
a second support portion, the second support portion sandwiching a plurality of optical fibers with the first support portion;
a fixing portion connected to the second support portion; and
the first convex surface comprises:
a first support surface configured for carrying the first optical modulation chip; and
a second support surface which comprises a first carrying surface and a second carrying surface, wherein the first carrying surface is configured to carry the first laser, and the second carrying surface is configured to carry the first optical fiber array.

5. The optical module according to claim 4, wherein the first optical modulation chip is fixed to the first support surface via adhesive, the first laser is fixed to the first carrying surface via adhesive, and the first optical fiber array is fixed to the second carrying surface via adhesive;
the second carrying surface is shorter than the first carrying surface, such that the fixing portion is suspended relative to the second carrying surface;
there is a gap between the first support surface and the second support surface to collect the adhesive;
there is a gap between the first carrying surface and the second carrying surface to collect the adhesive.

6. The optical module according to claim 2, wherein the end face of the first optical modulation chip is formed with one input optical port and a plurality of output optical ports, and output wavelengths of the plurality of output optical ports are the same;
the input optical port faces the first laser to receive a beam of light that does not carry a signal output by the first laser;
the output optical ports face the first optical fiber array to couple multiple optical signals modulated by the first optical modulation chip to the first optical fiber array;
an input optical waveguide and an output optical waveguide of the first optical modulation chip are respectively non-perpendicular to the end face of the first optical modulation chip; and
a light entering end face of the first optical fiber array is designed as an inclined surface, and the inclined surface is coupled and connected with the end face of the first optical modulation chip.

7. The optical module according to claim 6, wherein the first notch portion comprises:
a first through hole portion configured for embedding the first laser and the first optical fiber array;
a second through hole portion which is connected to one end of the first through hole portion, and configured to embed the first optical modulation chip, the second through hole portion being inclined relative to the first through hole portion; and
a third through hole portion connected to the other end of the first through hole portion, a size of the third through hole portion being smaller than that of the first through hole portion; and the first optical fiber array passes along the third through hole portion.

8. The optical module according to claim 2, wherein the surface of the first substrate comprises a concave surface and a boss, and wherein the concave surface is configured to carry the first light turning member, and the boss is configured to carry the first optical reception chip.

9. The optical module according to claim 2, wherein the first optical reception component comprises a first TIA, and the first TIA is located on the surface of the circuit board;
the surface of the circuit board is formed with a groove portion, and the first substrate and the second substrate are arranged in the groove portion, such that a surface of the first optical reception chip is flush with a surface of the first TIA.

10. The optical module according to claim 2, wherein the first substrate and the second substrate are connectable together.

11. The optical module according to claim 1, wherein the first optical reception component and the second optical reception component can be arranged on different surfaces of the circuit board.

12. The optical module according to claim 1, wherein the first lens assembly and the first optical reception chip are respectively located on an upper surface of the circuit board; and
the second lens assembly and the second optical reception chip are respectively located on the upper surface of the circuit board, or the second lens assembly and the second optical reception chip are respectively located on a lower surface of the circuit board.

13. The optical module according to claim 1, wherein
the first light turning member is disposed on a bottom surface of the base;
the first optical reception chip is located on a lower surface of the circuit board;
the second light turning member is disposed on the bottom surface of the base; and
the second optical reception chip is located on the lower surface of the circuit board.

14. The optical module according to claim 13, wherein surfaces of the first optical emission component and the second optical emission component are covered with a protective cover;
the base comprises an enclosure;
the enclosure is placed on a surface of the circuit board, and a surface of the circuit board surrounded by the enclosure is exposed, such that the first optical reception chip and the second optical reception chip are located on the surface of the circuit board surrounded by the enclosure;
a cover plate is arranged above the first optical reception component and the second optical reception component, one end of the cover plate is arranged on a body surface of the base, and the other end of the cover plate is arranged on a surface of the enclosure.

15. The optical module according to claim 13, wherein the first light turning member comprises a first optical fiber support portion and a second optical fiber support portion, an optical fiber is sandwiched between the first optical fiber support portion and the second optical fiber support portion, and one end of the optical fiber is formed with a reflective end face;
the first optical reception component comprises a first converging lens, the second optical fiber support portion extends to below the reflective end face, such that the first converging lens is fixed on the second optical fiber support portion, and the first converging lens is located between the reflective end face and the first optical reception chip.

16. The optical module according to claim 13, wherein an input optical waveguide of the first optical modulation chip is arranged perpendicular to the end face of the first optical modulation chip, and an output optical waveguide is arranged non-perpendicular to the end face of the first optical modulation chip;
the first laser is arranged perpendicularly to light entering and exiting end faces of the first optical modulation chip so as to be consistent with an extension direction of the input optical waveguide of the first optical modulation chip; and
the first optical fiber array is arranged tilted relative to the light entering and exiting end faces of the first optical modulation chip to be consistent with an extension direction of the output optical waveguide of the first optical modulation chip.

17. The optical module according to claim 15, wherein the first light turning member comprises an optical fiber fixing portion, the optical fiber fixing portion is connected to the second optical fiber support portion, and the optical fiber passes along an interior of the optical fiber fixing portion;
one side of a surface where the second optical fiber support portion is located is formed with a groove, and the groove can make a surface where the optical fiber fixing portion is located lower than the surface where the second optical fiber support portion is located.

18. The optical module according to claim 13, wherein the first optical reception component comprises:
a first TIA located on a surface of the circuit board, and the first optical reception chip is carried on a surface of the first TIA.

19. The optical module of claim 13, wherein the first lens assembly comprises a first optical fiber ribbon, and the second lens assembly comprises a second optical fiber ribbon;
the first optical reception component and the second optical reception component are located side by side at one side of the bottom surface of the base, and the first optical fiber ribbon and the second optical fiber ribbon pass along the bottom surface of the base.
